(19) Europäisches Patentamt
European Patent Office
Office européen des brevets

(11) **EP 4 193 542 B1**

(12) **EUROPEAN PATENT SPECIFICATION**

(45) Date of publication and mention
of the grant of the patent:
**17.04.2024 Bulletin 2024/16**

(51) International Patent Classification (IPC):
**H04L 5/00** *(2006.01)*     *H04B 7/06* *(2006.01)*
**H04W 72/044** *(2023.01)*     *H04W 72/1268* *(2023.01)*

(21) Application number: **21758146.1**

(52) Cooperative Patent Classification (CPC):
**H04L 5/0055; H04L 5/0035;** H04B 7/0617;
H04L 5/0007; H04W 72/046; H04W 72/1268

(22) Date of filing: **06.08.2021**

(86) International application number:
**PCT/IB2021/057286**

(87) International publication number:
**WO 2022/029723 (10.02.2022 Gazette 2022/06)**

(54) **SYSTEM AND METHODS OF PUCCH ENHANCEMENT WITH INTRA-SLOT REPETITIONS TOWARDS MULTIPLE TRPS**

SYSTEM UND VERFAHREN ZUR PUCCH-VERBESSERUNG MIT INTRA-SLOT-WIEDERHOLUNGEN IN RICHTUNG MEHRERER TRPS

SYSTÈME ET PROCÉDÉS D'AMÉLIORATION DE PUCCH AVEC DES RÉPÉTITIONS INTRA-FENTES VERS DE MULTIPLES TRPS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.08.2020 US 202063063024 P**

(43) Date of publication of application:
**14.06.2023 Bulletin 2023/24**

(73) Proprietor: **Telefonaktiebolaget LM Ericsson (publ)**
**164 83 Stockholm (SE)**

(72) Inventors:
• **GAO, Shiwei**
**Nepean, Ontario K2J 0H5 (CA)**
• **BLANKENSHIP, Yufei**
**Kildeer, Illinois 60047 (US)**
• **FRENNE, Mattias**
**754 43 Uppsala (SE)**
• **MURUGANATHAN, Siva**
**Stittsville, Ontario K2S 0R3 (CA)**

• **ZHANG, Jianwei**
**170 62 Solna (SE)**

(74) Representative: **Laqua, Bernd Christian Kurt**
**Wuesthoff & Wuesthoff**
**Patentanwälte und Rechtsanwalt PartG mbB**
**Schweigerstraße 2**
**81541 München (DE)**

(56) References cited:
**WO-A1-2019/244221**

• **NTT DOCOMO ET AL: "Enhancements on multi-TRP/panel transmission", 3GPP DRAFT; R1-1911184, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Chongqing, China; 20191014 - 20191020 4 October 2019 (2019-10-04), XP051789956, Retrieved from the Internet: URL:http://www.3gpp.org/ftp/tsg_ran/WG1_RL 1/TSGR1_98b/Docs/R1-1911184.zip [retrieved on 2019-10-04]**

**Description**

<u>Technical Field</u>

The present disclosure relates to Physical Uplink Control Channel (PUCCH) reliability and latency.

<u>Background</u>

The next generation mobile wireless communication system (5G) or New Radio (NR), will support a diverse set of use cases and a diverse set of deployment scenarios. The later includes deployment at both low frequencies (below 6 GHz) and very high frequencies (up to 10's of GHz).

*NR Frame Structure and Resource Grid*

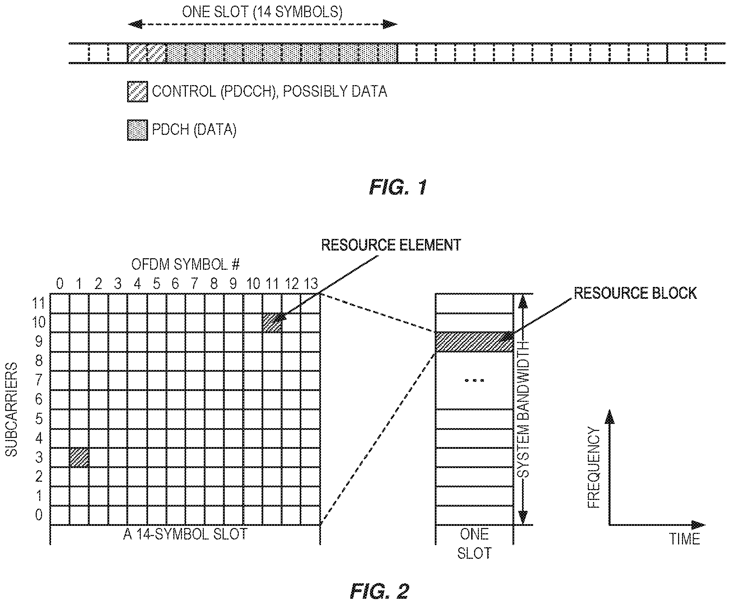

NR uses Cyclic Prefix Orthogonal Frequency Division Multiplexing (CP-OFDM) in both Downlink (DL) (i.e., from a network node, gNB, or base station, to a User Equipment (UE) and Uplink (UL) (i.e., from UE to gNB). Discrete Fourier Transform (DFT) spread OFDM is also supported in the uplink. In the time domain, NR downlink and uplink are organized into equally sized subframes of 1ms each. A subframe is further divided into multiple slots of equal duration. The slot length depends on subcarrier spacing. For subcarrier spacing of Δf=15kHz, there is only one slot per subframe, and each slot consists of 14 OFDM symbols.
Data scheduling in NR is typically on slot basis, an example is shown in Figure 1 with a 14-symbol slot, where the first two symbols contain Physical Downlink Control Channel (PDCCH) and the rest contains physical shared data channel, either Physical Downlink Shared Channel (PDSCH) or Physical Uplink Shared Channel (PUSCH).
Different subcarrier spacing values are supported in NR. The supported subcarrier spacing values (also referred to as different numerologies) are given by Δ*f* =
(15 × 2$^\mu$) *kHz* where ∈ {0,1,2,3,4}. Δ*f* = 15*kHz* is the basic subcarrier spacing. The slot durations at different subcarrier spacings is given by $\frac{1}{2^\mu}\ ms$ .
In the frequency domain, a system bandwidth is divided into Resource Blocks (RBs), each corresponding to 12 contiguous subcarriers. The RBs are numbered starting with 0 from one end of the system bandwidth. The basic NR physical time-frequency resource grid is illustrated in Figure 2, where only one RB within a 14-symbol slot is shown. One OFDM subcarrier during one OFDM symbol interval forms one Resource Element (RE).
Downlink and uplink data transmissions can be either dynamically or semi-persistently scheduled by a gNB. In case of dynamic scheduling, the gNB may transmit DL Control Information (DCI) in a downlink slot to a UE on PDCCH about data carried on PDSCH to the UE and/or data carried on PUSCH to be transmitted by the UE. In case of semi-persistent scheduling, periodic data transmission in certain slots can be configured and activated/deactivated.
For each transport block data transmitted over PDSCH, a Hybrid Automatic Repeat Request (HARQ) Acknowledgement (ACK) is sent in a UL Physical Uplink Control Channel (PUCCH) on whether it is decoded successfully or not. An ACK is sent if it is decoded successfully and a Non-acknowledgement (NACK) is sent otherwise.
PUCCH can also carry other UL control information (UCI) such as scheduling request (SR) and DL channel state information (CSI).

*PUCCH Formats*

Five PUCCH formats are defined in NR, i.e., PUCCH formats 0 to 4. UE transmits UCI in a PUCCH using PUCCH format 0 if

- the transmission is over 1 symbol or 2 symbols,
- the number of HARQ-ACK information bits with positive or negative SR (HARQ-ACK/SR bits) is 1 or 2

UE transmits UCI in a PUCCH using PUCCH format 1 if

- the transmission is over 4 or more symbols,
- the number of HARQ-ACK/SR bits is 1 or 2

UE transmits UCI in a PUCCH using PUCCH format 2 if

- the transmission is over 1 symbol or 2 symbols,
- the number of UCI bits is more than 2

UE transmits UCI in a PUCCH using PUCCH format 3 if

- the transmission is over 4 or more symbols,
- the number of UCI bits is more than 2,

UE transmits UCI in a PUCCH using PUCCH format 4 if

- the transmission is over 4 or more symbols,
- the number of UCI bits is more than 2.

PUCCH formats 0 and 2 use one or two OFDM symbols while PUCCH formats 1, 3, and 4 can span from 4 to 14 symbols. Thus, PUCCH format 0 and 2 are referred to as short PUCCH while PUCCH formats 1, 3, and 4 are referred to as long PUCCH.

A PUCCH format 0 resource can be one or two OFDM symbols within a slot in time domain and one RB in frequency domain. UCI is used to select a cyclic shift of a computer-generated length 12 base sequence which is mapped to the RB. The starting symbol and the starting RB are configured by Radio Resource Control (RRC). In case of 2 symbols are configured, the UCI bits are repeated in 2 consecutive symbols.

A PUCCH format 2 resource can be one or two OFDM symbols within a slot in time domain and one or more RB in frequency domain. UCI in PUCCH Format 2 is encoded with Reed-Muller (RM) codes ($\leq$11 bit UCI+ Cyclic Redundancy Check (CRC)) or Polar codes (>11 bit UCI+CRC) and scrambled. In case of 2 symbols are configured, UCI is encoded and mapped across two consecutive symbols.

Intra-slot Frequency Hopping (FH) may be enabled in case of 2 symbols are configured for PUCCH formats 0 and 2. If FH is enabled, the starting Physical Resource Block (PRB) in the second symbol is configured by RRC. Cyclic shift hopping is used when 2 symbols are configured such that different cyclic shifts are used in the 2 symbols. Figure 1 illustrates an example of one and two symbol short PUCCH without FH.

On the other hand, a PUCCH format 1 resource is 4 - 14 symbols long and 1 PRB wide per hop. A computer-generated length 12 base sequence is modulated with UCI and weighted with time-domain Orthogonal Cover Code (OCC) code. Frequency-hopping with one hop within the active UL Bandwidth Part (BWP) for the UE is supported and can be enabled/disabled by RRC. Base sequence hopping across hops is enabled in case of FH and across slots in case of no FH.

A PUCCH Format 3 resource is 4 - 14 symbols long and one or multiple PRB wide per hop. UCI in PUCCH Format 3 is encoded with RM codes ($\leq$11 bit UCI+CRC) or Polar codes (>11 bit UCI+CRC) and scrambled.

A PUCCH Format 4 resource is also 4 - 14 symbols long but 1 PRB wide per hop. It has a similar structure as PUCCH format 3 but can be used for multi-UE multiplexing.

For PUCCH formats 1, 3, or 4, a UE can be configured by a number of slots, $N_{\text{PUCCH}}^{\text{repeat}}$, for repetitions of a PUCCH transmission by respective *nrofSlots*. For $N_{\text{PUCCH}}^{\text{repeat}} > 1$,

- the UE repeats the PUCCH transmission with the UCI over $N_{\text{PUCCH}}^{\text{repeat}}$ slots,
- a PUCCH transmission in each of the $N_{\text{PUCCH}}^{\text{repeat}}$ slots has a same number of consecutive symbols,
- a PUCCH transmission in each of the $N_{\text{PUCCH}}^{\text{repeat}}$ slots has a same first symbol,
- if the UE is configured to perform frequency hopping for PUCCH transmissions across different slots,

    ∘ the UE performs frequency hopping per slot,
    ∘ the UE transmits the PUCCH starting from a first PRB in slots with even number and starting from the second PRB in slots with odd number (The slot indicated to the UE for the first PUCCH transmission has number 0 and each subsequent slot until the UE transmits the PUCCH in $N_{\text{PUCCH}}^{\text{repeat}}$ slots is counted regardless of whether or not the UE transmits the PUCCH in the slot), and
    ∘ the UE does not expect to be configured to perform frequency hopping for a PUCCH transmission within a slot, and

- If the UE is not configured to perform frequency hopping for PUCCH transmissions across different slots and if the UE is configured to perform frequency hopping for PUCCH transmissions within a slot, the frequency hopping pattern between the first PRB and the second PRB is same within each slot.

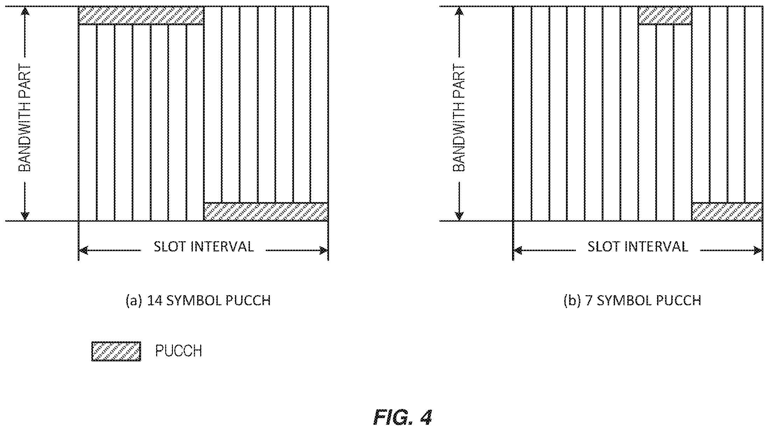

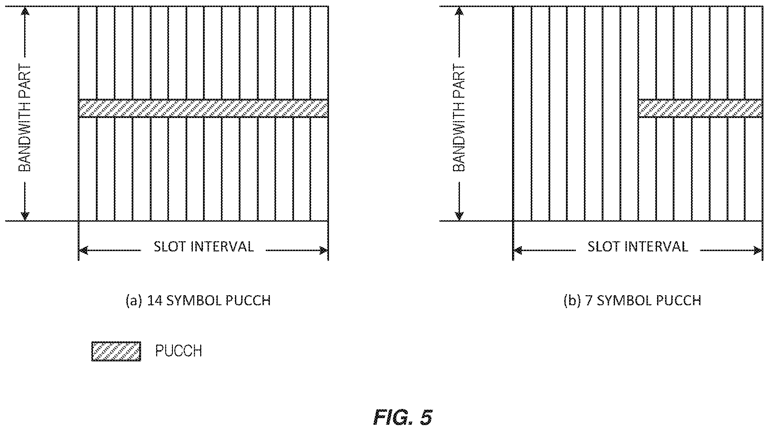

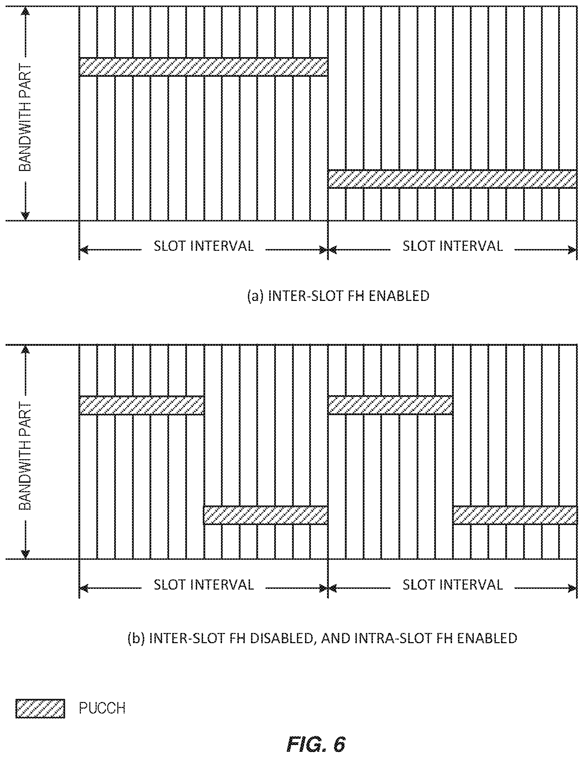

Figure 4 illustrates an example of 14-symbol and 7-symbol long PUCCH with intra-slot FH enabled. Figure 5 illustrates an example of 14-symbol and 7-symbol long PUCCH with intra-slot FH disabled. Figure 6 illustrates an example of PUCCH repetition in two slots with (a) inter-slot FH enabled and (b) inter-slot FH disabled while intra-slot FH enabled.

*Sub-slot based PUCCH transmission*

In NR Release 16, sub-slot based PUCCH transmission was introduced so that HARQ-Ack associated with a different type of traffic can be multiplexed in a same UL slot, each transmitted in a different sub-slot. The sub-slot size can be higher layer configured to either 2 symbols or 7 symbols. In case of sub-slot configuration each with 2 symbols, there are 7 sub-slots in a slot. In case of sub-slot with 7 symbols, there are two sub-slots in a slot.

*Spatial Relation Definition*

Spatial relation is used in NR to refer to a relationship between an UL reference signal (RS) such as PUCCH demodulation reference signal (DMRS) and another RS, which can be either a DL RS (channel state information RS (CSI-RS) or Synchronization Signal Block (SSB)) or an UL RS (Sounding Reference Signal (SRS)).

If an UL RS is spatially related to a DL RS, it means that the UE should transmit the UL RS in the opposite (reciprocal) direction from which it received the DL RS previously. More precisely, the UE should apply the "same" transmitter (Tx) spatial filtering configuration for the transmission of the UL RS as the receiver (Rx) spatial filtering configuration it used to receive the spatially related DL RS previously. Here, the terminology 'spatial filtering configuration' may refer to the antenna weights that are applied at either the transmitter or the receiver for data/control transmission/reception. The DL RS is also referred as the spatial filter reference signal.

On the other hand, if a first UL RS is spatially related to a second UL RS, then the UE should apply the same Tx spatial filtering configuration for the transmission for the first UL RS as the Tx spatial filtering configuration it used to transmit the second UL RS previously.

In NR Release 16, a UE can be RRC configured with a list of up to 64 spatial relations for PUCCH. For a given PUCCH resource, one of the spatial relations is activated via a Media Access Control (MAC) Control Element (CE) message. The UE adjusts the Tx spatial filtering configuration for the transmission on that PUCCH resource according to the activated signaled spatial relation.

*URLLC data transmission over Multiple TRPs*

In NR Release 16, PDSCH transmission over multiple Transmission and Reception Points (TRPs) has been introduced for Ultra-Reliable Low Latency (URLLC) type of applications to improve PDSCH reliability, in which a PDSCH is repeated over two TRPs in either Spatial Division Multiplexing (SDM), Frequency Domain Multiplexing (FDM) or Time Domain Multiplexing (TDM) manner. In NR Release 17, it has been proposed to further introduce PUCCH enhancement with multiple TRPs. One possible approach is to repeat a PUCCH towards different TRPs.

Document "Enhancements on multi-TRP/panel transmission", LTT DoCoMo Inc., 3GPP draft, R1-1911184, discloses an evaluation of enhancements on multi-TRP/panel transmission in Rel-16. Inter alia, the following proposal was made. Conclude to support PUCCH repetition within a slot, FFS details. Support spatialrelationinfo/precoder-cycling across repetitions for PUCCH repetition. The following alternatives for spatialrelationinfo update/indication can be considered: Alt.1: spatial relation info for PUCCH for HARQ-ACK transmission to multiple TRPs is configured by RRC; Alt.2: spatial relation info for PUCCH for HARQ-ACK transmission to multiple TRPs is configured by RRC and MAC CE; Alt.3: spatial relation info for PUCCH for HARQ-ACK transmission for multiple TRPs is indicated by RRC and DCI.

Document WO 2019/244221 A1 (and its post-published patent family member US 2021/259004 A1) discloses a user terminal that includes: a receiving section that receives a downlink shared channel repetitively transmitted from a plurality of transmission and reception points; and a control section that controls transmission of delivery acknowledgment information at each repetition of the downlink shared channel or transmission of delivery acknowledgment information generated based on all the repetitions of the downlink shared channel, using an uplink control channel to at least one of the plurality of transmission and reception points.

Summary

Systems and methods are disclosed herein for Physical Uplink Control Channel (PUCCH) enhancement utilizing intra-slot transmission repetitions towards multiple transmission and receiving points (TRPs).

According to the present disclosure, there are provided methods, a UE, a base station and a computer-readable medium according to the independent claims. Developments are set forth in the dependent claims.

Brief Description of the Drawings

The accompanying drawing figures incorporated in and forming a part of this specification illustrate several aspects of the disclosure, and together with the description serve to explain the principles of the disclosure.

Figure 1 illustrates a typical slot in Third Generation Partnership Project (3GPP) New Radio (NR).

Figure 2 illustrates a basic NR physical time-frequency resource grid.

Figure 2 illustrates one example of one-symbol and two-symbol short Physical Uplink Control Channel (PUCCH) without Frequency Hopping (FH).

Figure 4 illustrates one example of 14-symbol PUCCH and 7-symbol long PUCCH with intra-slot FH enabled.

Figure 5 illustrates one example of 14-symbol PUCCH and 7-symbol long PUCCH with intra-slot FH disabled.

Figure 6 illustrates one example of PUCCH repetition in two slots with (a) inter-slot FH enabled and (b) inter-slot FH disabled while intra-slot FH enabled.

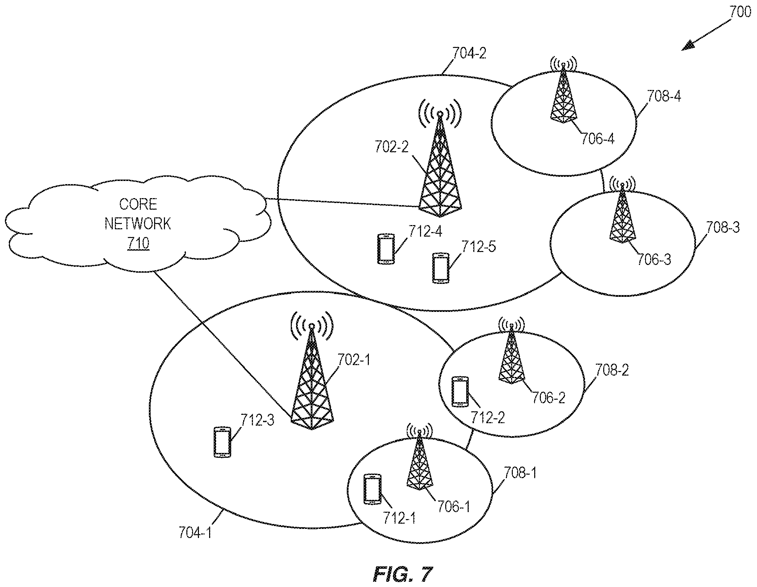

Figure 7 illustrates one example of a cellular communications system in which embodiments of the present disclosure may be implemented.

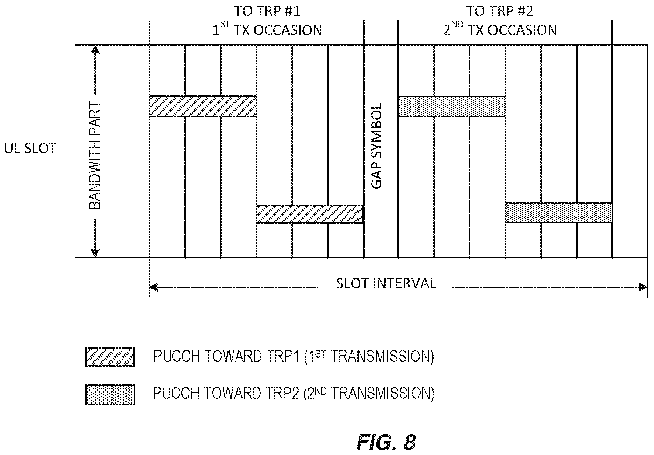

Figure 8 illustrates one example of intra-slot PUCCH repetitions with FH for two different transmission and receiving points (TRPs) in accordance with embodiments of the present disclosure.

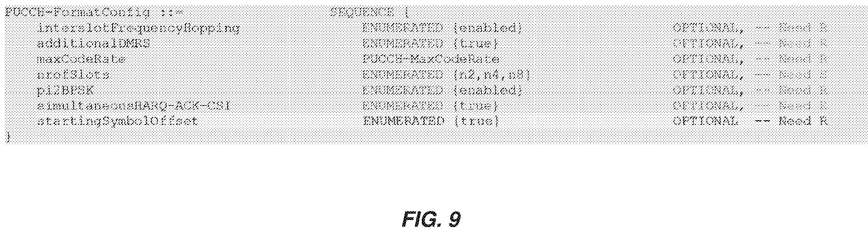

Figure 9 illustrates details of PUCCH-FormatConfig field.

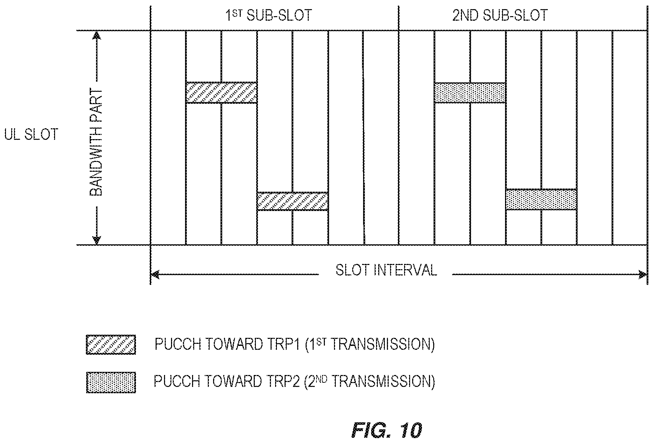

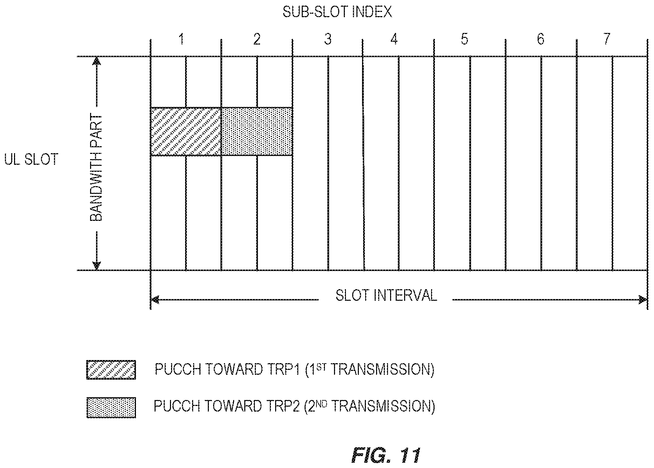

Figures 10 and 11 illustrate one example of sub-slot based PUCCH repetitions with FH for two different TRPs in accordance with embodiments of the present disclosure.

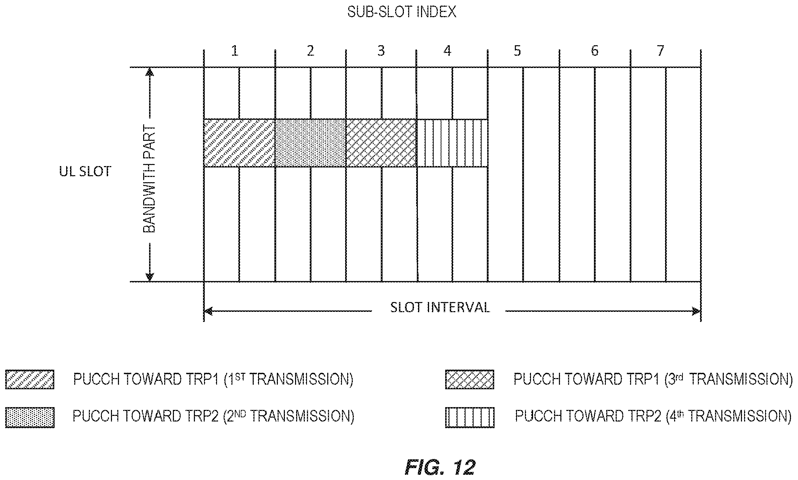

Figure 12 illustrates one example of cyclic mapping between PUCCH transmission occasions and TRPs in accordance with embodiments of the present disclosure.

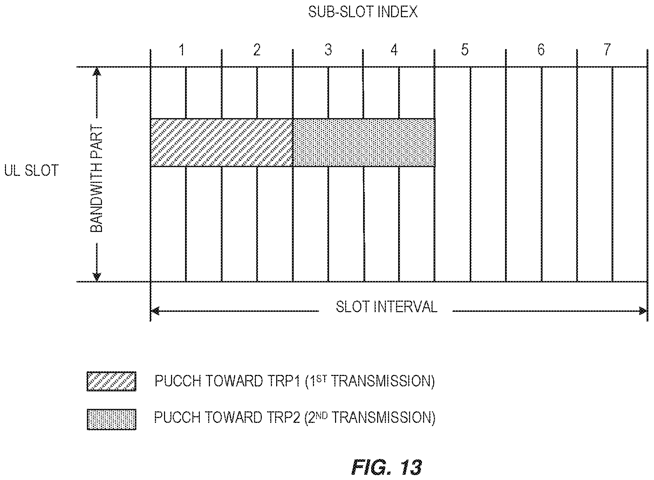

Figure 13 illustrates one example of sequentially mapping between PUCCH transmission occasions and TRPs in accordance with embodiments of the present disclosure.

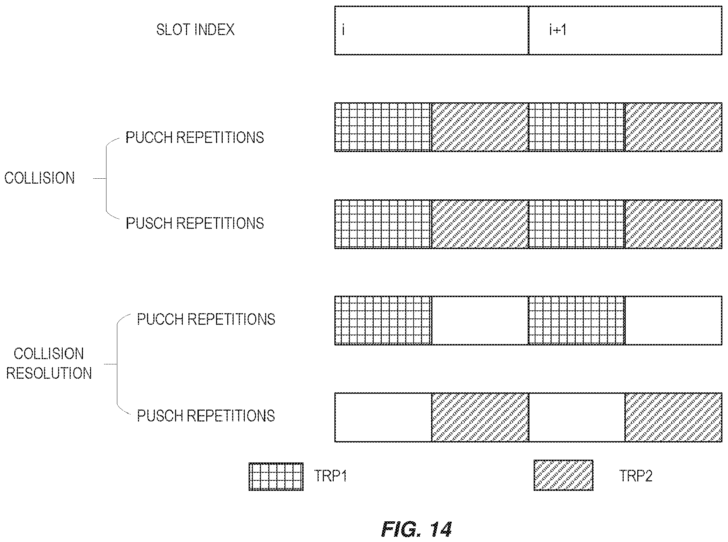

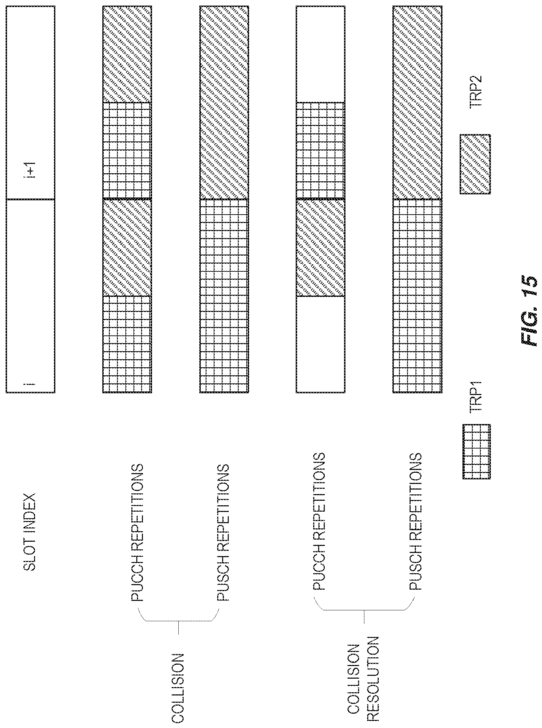

Figures 14 and 15 illustrate one example of collision handling in PUCCH repetition for two different TRPs in accordance with embodiments of the present disclosure.

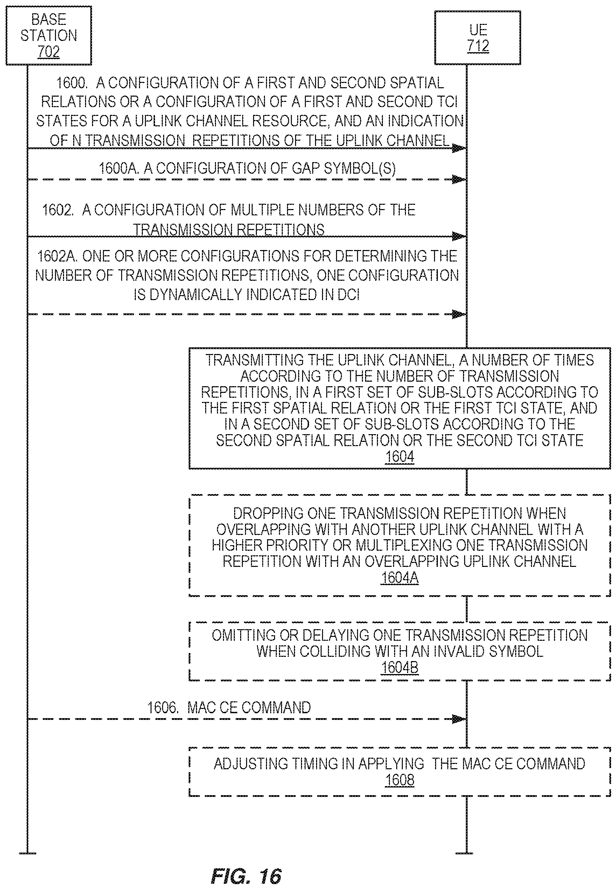

Figure 16 illustrates the operation of a base station and a User Equipment (UE) for PUCCH repetition in accordance with embodiments of the present disclosure.

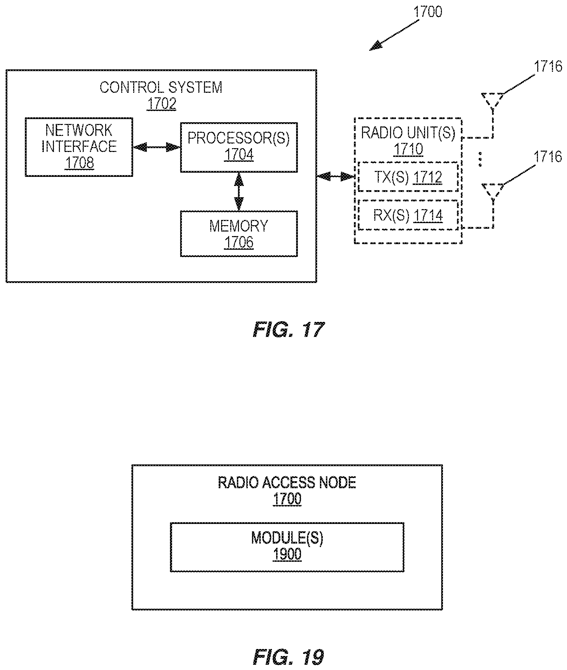

Figures 17, 18, and 19 are schematic block diagrams of example embodiments of a radio access node, or more generally a network node, in which embodiments of the present disclosure may be implemented.

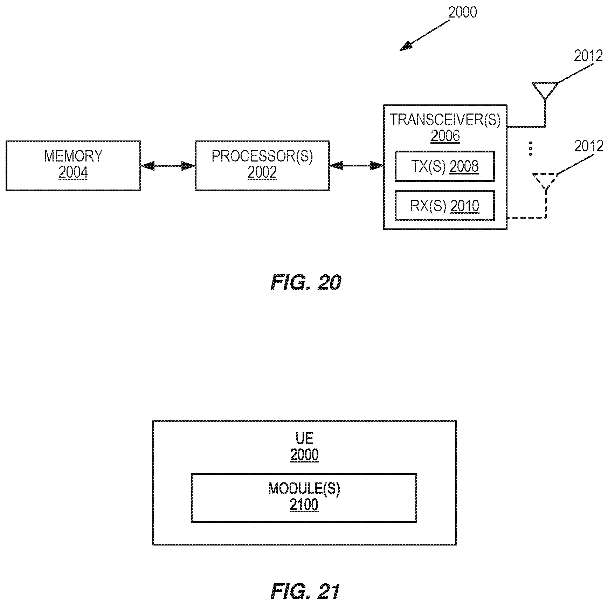

Figures 20 and 21 are schematic block diagrams of example embodiments of a wireless communication device (e.g., a UE) in which embodiments of the present disclosure may be implemented.

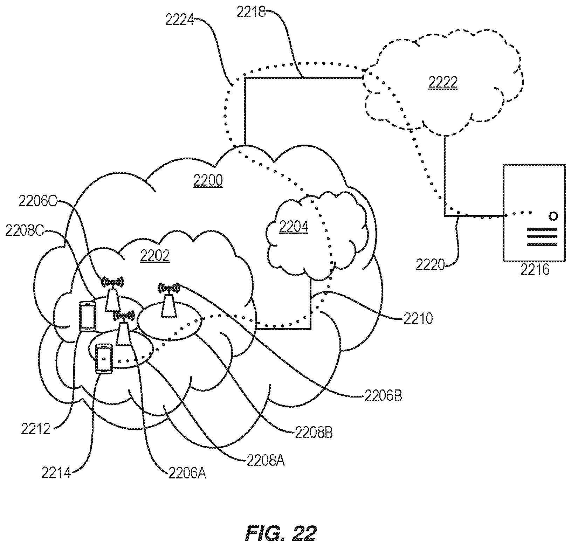

Figure 22 illustrates an example embodiment of a communication system in which embodiments of the present disclosure may be implemented.

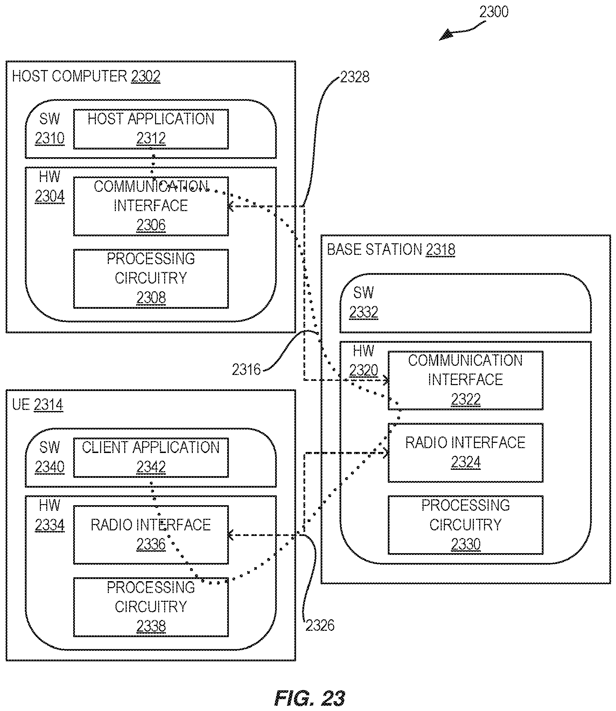

Figure 23 illustrates example embodiments of the host computer, base station, and UE of Figure 22.

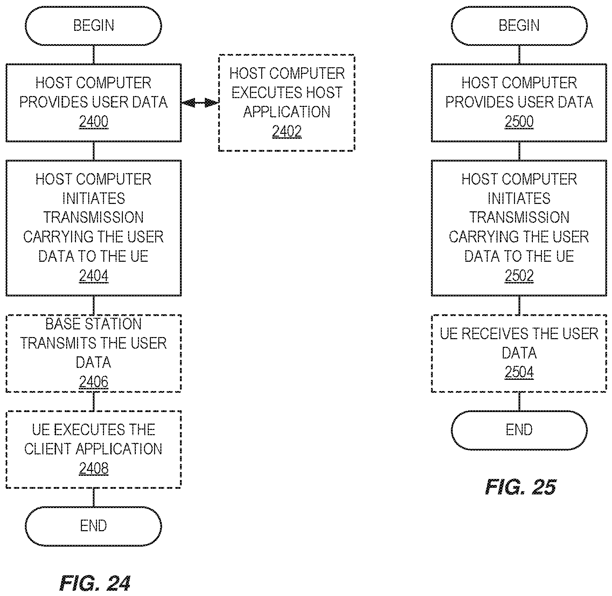

Figures 24, 25, 26, and 27 are flow charts that illustrate example embodiments of methods implemented in a communication system such as that of Figure 22.

Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure.

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features, and advantages of the enclosed embodiments will be apparent from the following description.

**Radio Node:** As used herein, a "radio node" is either a radio access node or a wireless communication device.

**Radio Access Node:** As used herein, a "radio access node" or "radio network node" or "radio access network node" is any node in a Radio Access Network (RAN) of a cellular communications network that operates to wirelessly transmit and/or receive signals. Some examples of a radio access node include, but are not limited to, a base station (e.g., a New Radio (NR) base station (gNB) in a Third Generation Partnership Project (3GPP) Fifth Generation (5G) NR network or an enhanced or evolved Node B (eNB) in a 3GPP Long Term Evolution (LTE) network), a high-power or macro base station, a low-power base station (e.g., a micro base station, a pico base station, a home eNB, or the like), a relay node, a network node that implements part of the functionality of a base station (e.g., a network node that implements a gNB Central Unit (gNB-CU) or a network node that implements a gNB Distributed Unit (gNB-DU)) or a network node that implements part of the functionality of some other type of radio access node.

**Core Network Node:** As used herein, a "core network node" is any type of node in a core network or any node that implements a core network function. Some examples of a core network node include, e.g., a Mobility Management Entity (MME), a Packet Data Network Gateway (P-GW), a Service Capability Exposure Function (SCEF), a Home Subscriber Server (HSS), or the like. Some other examples of a core network node include a node implementing a Access and Mobility Management Function (AMF), a User Plane Function (UPF), a Session Management Function (SMF), an Authentication Server Function (AUSF), a Network Slice Selection Function (NSSF), a Network Exposure Function (NEF), a Network Function (NF) Repository Function (NRF), a Policy Control Function (PCF), a Unified Data Management (UDM), or the like.

**Communication Device:** As used herein, a "communication device" is any type of device that has access to an access network. Some examples of a communication device include, but are not limited to: mobile phone, smart phone, sensor device, meter, vehicle, household appliance, medical appliance, media player, camera, or any type of consumer electronic, for instance, but not limited to, a television, radio, lighting arrangement, tablet computer, laptop, or Personal Computer (PC). The communication device may be a portable, hand-held, computer-comprised, or vehicle-mounted mobile device, enabled to communicate voice and/or data via a wireless or wireline connection.

**Wireless Communication Device:** One type of communication device is a wireless communication device, which may be any type of wireless device that has access to (i.e., is served by) a wireless network (e.g., a cellular network). Some examples of a wireless communication device include, but are not limited to: a User Equipment device (UE) in a 3GPP network, a Machine Type Communication (MTC) device, and an Internet of Things (IoT) device. Such wireless communication devices may be, or may be integrated into, a mobile phone, smart phone, sensor device, meter, vehicle, household appliance, medical appliance, media player, camera, or any type of consumer electronic, for instance, but not limited to, a television, radio, lighting arrangement, tablet computer, laptop, or PC. The wireless communication device may be a portable, hand-held, computer-comprised, or vehicle-mounted mobile device, enabled to communicate voice and/or data via a wireless connection.

**Network Node:** As used herein, a "network node" is any node that is either part of the RAN or the core network of a cellular communications network/system.

Note that the description given herein focuses on a 3GPP cellular communications system and, as such, 3GPP terminology or terminology similar to 3GPP terminology is oftentimes used. However, the concepts disclosed herein are not limited to a 3GPP system.

**Transmission/Reception Point (TRP):** In some embodiments, a TRP may be a network node, radio head, a spatial relation or a Transmission Configuration Indicator (TCI) state. A TRP may be represented by a spatial relation or a TCI state in some embodiments. In some embodiments, a TRP may be using multiple TCI states.

Note that, in the description herein, reference may be made to the term "cell"; however, particularly with respect to 5G NR concepts, beams may be used instead of cells and, as such, it is important to note that the concepts described herein are equally applicable to both cells and beams.

There currently exist certain challenge(s). Although PUCCH reliability for PUCCH formats 1,3 and 4 can be increased with inter-slot repetition over multiple TRPs, it also introduces extra delays. For some applications, such as Ultra-Reliable Low Latency (URLLC) applications, besides PUCCH reliability, low latency is also required. How to balance between PUCCH reliability and PUCCH latency is an issue. In addition, when mixed enhanced Mobile Broadband (eMBB) and URLLC traffic are served, the corresponding required reliability and latency are different, how to determine the number of repetitions for each type of traffic is another issue.

Certain aspects of the present disclosure and their embodiments may provide solutions to the aforementioned or other challenges. In this disclosure, different ways of PUCCH enhancement are disclosed. In one embodiment, a PUCCH is repeated two or more times within a slot, each toward a TRP, and a different PUCCH repetition may be associated with a different TRP. An association between a PUCCH transmission and a TRP for reception can be made using a spatial relation or a unified TCI state.

In addition, embodiments of a method of applying different number of PUCCH repetitions based on the associated Physical Downlink Shared Channel (PDSCH) (i.e., the PDSCH with its corresponding HARQ-ACK carried by the PUCCH) are also disclosed, in which different number of PUCCH repetitions may be used for different traffic types (e.g., PDSCH with different priorities, eMBB or URLLC) that a PUCCH is associated with.

Certain embodiments may provide one or more of the following technical advantage(s). One benefit of intra-slot repetition towards different TRPs is to improve PUCCH reliability in case that the channel to the TRP is blocked while at the same time keeping the latency low. Using different number of PUCCH repetitions for different traffic is beneficial in case of mixed eMBB and URLLC traffic being served simultaneously, which has different reliability requirements (i.e., requiring different number of repetitions). In such case, a small number of repetitions or even no repetition may be used for a PUCCH associated with eMBB traffic to save PUCCH resources and potentially UE battery power consumption.

Figure 7 illustrates one example of a cellular communications system 700 in which embodiments of the present disclosure may be implemented. In the embodiments described herein, the cellular communications system 700 is a 5G system (5GS) including a Next Generation RAN (NG-RAN) and a 5G Core (5GC). In this example, the RAN includes base stations 702-1 and 702-2, which in the 5GS include NR base stations (gNBs) and optionally next generation eNBs (ng-eNBs) (e.g., LTE RAN nodes connected to the 5GC), controlling corresponding (macro) cells 704-1 and 704-2. The base stations 702-1 and 702-2 are generally referred to herein collectively as base stations 702 and individually as base station 702. Likewise, the (macro) cells 704-1 and 704-2 are generally referred to herein collectively as (macro) cells 704 and individually as (macro) cell 704. The RAN may also include a number of low power nodes 706-1 through 706-4 controlling corresponding small cells 708-1 through 708-4. The low power nodes 706-1 through 706-4 can be small base stations (such as pico or femto base stations) or Remote Radio Heads (RRHs), or the like. Notably, while not illustrated, one or more of the small cells 708-1 through 708-4 may alternatively be provided by the base stations 702. The low power nodes 706-1 through 706-4 are generally referred to herein collectively as low power nodes 706 and individually as low power node 706. Likewise, the small cells 708-1 through 708-4 are generally referred to herein collectively as small cells 708 and individually as small cell 708. The cellular communications system 700 also includes a core network 710, which in the 5G System (5GS) is referred to as the 5GC. The base stations 702 (and optionally the low power nodes 706) are connected to the core network 710.

The base stations 702 and the low power nodes 706 provide service to wireless communication devices 712-1 through 712-5 in the corresponding cells 704 and 708. The wireless communication devices 712-1 through 712-5 are generally referred to herein collectively as wireless communication devices 712 and individually as wireless communication device 712. In the following description, the wireless communication devices 712 are oftentimes UEs, but the present disclosure is not limited thereto.

*Intra slot PUCCH repetition towards multiple TRPs*

In one embodiment, a UL control information (UCI) carried by one of the PUCCH formats is repeated within a slot multiple times, each toward a different TRP.

Note here in the following of the present disclosure that "transmission toward" in this aspect means that the UE is adjusting its direction of large or maximum radiation and/or transmit power and/or transmission timing for an intended reception by a given TRP. For example, a UE transmit a beam pointing in the direction of the desired TRP or selecting a directive antenna panel for transmission at the UE that is facing towards a certain desired direction towards a TRP. Also note that a certain TRP can be described in specifications by a spatial relation, a unified TCI state (a TCI state that can be used for both DL and UL indication) or an UL TCI state. Hence "transmission toward" TRP1 and TRP2 can equivalently be described as using e.g., first spatial relation and second spatial relation for the PUCCH transmission, respectively.

It should also be noted that even in Release 15 of NR, reception of an uplink signal by multiple TRPs is possible since which node that receives a certain message in uplink is transparent to the UE. It may be so that an uplink transmitted by a Release 15 UE is received by two TRPs. The distinction here is that by introducing the framework of "transmission toward", the UE is "made aware" that its multiple transmissions are intended for more than one TRP, and hence by specification, the transmission can be optimized, in terms of beam direction, power control and timing.

An example is shown in Figure 8, where a PUCCH with FH is repeated twice in a slot. A gap may be configured between the two repetitions to allow time for a UE to switch its receive panels or beams in high carrier frequencies (frequencies above 20GHz, e.g., FR2). The same number of symbols, the starting first and the second RBs are used in the repetition, i.e., the second transmission occasion. The 1st transmission occasion is toward TRP1 and the second transmission is toward TRP2. In case of channel blocking as it occurs often in FR2, this kind of repetition can be used to reduce the blocking probability. Note, as discussed above, the term TRP may not necessarily be captured in 3GPP specifications. A TRP may instead be represented in 3GPP specifications by a spatial relation, a unified TCI state (discussed in Release 17 of NR) or a UL TCI state. Two or more spatial relations or two or more UL TCI or two or more unified TCI states may be activated for a PUCCH resource for transmission to two or more TRPs.

In some embodiments, a gap symbol(s) as shown Figure 8 may be configured to the UE either in PUCCH-Config information element (see 3GPP TS 38.331) or a field within PUCCH-Config. In one specific embodiment, the gap symbol(s) is configured and controlled via a parameter 'startingSymbolOffset' as part of the PUCCH-FormatConfig field within the PUCCH-Config as shown in Figure 9.

If the parameter 'startingSymbolOffset' is enabled, then a gap symbol(s) is present between the first transmission occasion and the second transmission occasion as shown in Figure 8. If the parameter 'startingSymbolOffset' is not configured, then the first transmission occasion of PUCCH and the second transmission occasion of PUCCH do not have a gap symbol(s) in the middle, and the UE transmits the second transmission occasion of PUCCH in the symbol after the last symbol of the first transmission occasion of PUCCH.

Note that in some other embodiments the gap between the two PUCCH transmission occasions may be a configurable number of integer symbols. In this embodiment, the parameter 'startingSymbolOffset' can be an integer between 0 and a non-negative integer K. Then, the starting symbol of the second PUCCH transmission occasion has K symbol offset relative to the last symbol of the first PUCCH transmission occasion.

*Sub-slot based PUCCH repetition towards multiple TRPs*

In one embodiment, a PUCCH may be repeated in sub-slot level. An example is shown in Figure 10, where a PUCCH is repeated twice in two sub-slot each with 7 symbols with the 1st transmission occasion towards TRP1 and the second transmission occasion towards TRP2. The same time and frequency resource is used for the two repetitions in each sub-slot, i.e., the starting symbol (referenced to the start of sub-slot), number of symbols, and the starting Resource Blocks (RBs) for the first and second frequency hops.

Figure 11 is another example of sub-slot based PUCCH repetition with 2 symbols per sub-slot. The number of sub-slots based repetitions can be more than 2. In that case, the patterns towards (keep in mind that "toward" may be specified by spatial relation or UL or unified TCI state) different TRPs can be alternated among the TRPs (i.e., cyclic based), an example is shown in Figure 12. Alternatively, the mapping can be sequentially one TRP after another, an example is shown in Figure 13. While the examples shown do not use frequency hopping, it is possible that frequency hopping is configured together with repetitions, e.g., extending examples in Figure 11 to Figure 13 with FH within repetitions (e.g., having different starting RBs for the first and the second symbols in each repetition) or with FH across repetitions (e.g., having different starting RBs for different repetitions). Sub-slot PUCCH repetition can be used for all PUCCH formats supported (including PUCCH formats 0 and 2) in a sub-slot. The repetition may also be over more than one slot.

*Indication of number of PUCCH repetitions*

In NR Release 15, the number of slot-based PUCCH repetitions is configured by higher layers (such as Radio Resource Control (RRC) signaling between the gNB and the UE) for each PUCCH format. Considering mixed traffic types for a UE and different traffic types may have different reliability and latency requirements, different number of repetitions (either slot-based or sub-slot based) may be needed for PUCCH associated with different traffic types.

In one embodiment, for each PUCCH format, multiple numbers of repetitions may be configured, and depending on the traffic type that a PUCCH is associated with (or the physical layer priority of the UCI carried by the PUCCH), a different repetition number may be used.

In another embodiment, the number of repetitions for the associated PUCCH varies with the UCI content type, where the UCI content type can be: Hybrid Automatic Repeat Request (HARQ) Acknowledgement (ACK), Scheduling Request (SR), Channel State Information (CSI), where the CSI can be further divided into CSI-part1 and CSI-part2, or two or more of HARQ-ACK/SR/CSI multiplexed together.

For example, one RRC parameter signaled from the gNB to the UE provides the number of repetitions for PUCCH carrying SR, and a different RRC parameter provides the number of repetitions for PUCCH carrying HARQ-ACK. The various types of UCI can be provided with physical layer priority level as well, e.g., SR of high priority and SR of low priority. Then the number of PUCCH repetitions may depend on UCI type, and/or the physical layer priority of the UCI, where the UCI is carried by the PUCCH. If the PUCCH carries a mixture of various UCI types, then the number of PUCCH repetitions may be determined by the most important UCI being carried. For example, if UCI types are ranked from more important to less important by: HARQ-ACK > SR > CSI with HARQ-ACK and SR having higher priority and CSI having lower priority, then the number of PUCCH repetitions is determined by that of HARQ-ACK (i.e., the most important UCI being carried, since HARQ-ACK is more important than SR), if the PUCCH carries a mixture of {SR, HARQ-ACK}.

In another embodiment, if a PUCCH carrying a UCI type (e.g., HARQ-ACK) is scheduled by a DL Control Information (DCI), then the scheduling DCI can include a field, where the DCI field dynamically indicates the number of repetitions of the PUCCH. The dynamically signaled number of PUCCH repetitions may depend on UCI type, and/or the physical layer priority of the UCI, where the UCI is carried by the PUCCH. The DCI field size (including 0 bit, i.e., absence of the DCI field) for indicating the number of repetitions of the PUCCH may be configurable by a higher layer parameter.

In another embodiment, an existing DCI field may be used to indicate the number of PUCCH repetitions. For instance, the 'PUCCH resource indicator' field in DCI can be used to indicate the number of repetitions for PUCCH. For instance, one codepoint in a PUCCH resource indicator field in DCI may be configured with one number of PUCCH repetitions while another codepoint in the PUCCH resource indicator field in DCI may be associated with another number of PUCCH repetitions. Some codepoints of the PUCCH resource indicator field may be associated with a single PUCCH (i.e., number of PUCCH repetitions is 1). In another embodiment, the PUCCH resource indicator field in DCI may be partitioned into two sub-fields where a first sub-field is used to indicate the number of PUCCH repetitions while the second sub-field is used to indicate the PUCCH resource to be used for PUCCH transmission.

In one embodiment, a repetition number value (the first repetition number value) is configured to be used for UCI feedback for URLLC based traffic (or high physical layer priority) and another (the second repetition number value) for eMBB traffic (or low physical layer priority). While PUCCH can carry various types of UCI content (HARQ-ACK, SR, CSI, or a combination thereof), here PUCCH carrying HARQ-ACK is used as an illustration.

To perform dynamic switching between the first and second repetition number values (which are configured by higher layers), some mechanism is needed to indicate this switching to the UE, since the gNB and the UE must be aligned in the number of repetitions to use for PUCCH. If a PUCCH carries a HARQ-ACK associated with a PDSCH, which is scheduled with one or more of the following criteria, then the first repetition number may be used for PUCCH transmission:

- 2 TCI states are indicated in the Transmission configuration indication field (if present) of the DCI scheduling the PDSCH;
- One of the DL multi-TRP PDSCH schemes (i.e., configured by a higher layer parameter *RepetitionSchemeConfig-r16* in 3GPP TS38.331 V16.1.0) is used for an associated PDSCH;
- The Priority indicator field (if present) of the scheduling DCI is set to "1" (i.e., high physical layer priority);
- The priority level is set to "1" (i.e., high physical layer priority) in RRC parameter of the SPS configuration, where the SPS PDSCH, or SPS release DCI, is associated with the HARQ-ACK carried by the PUCCH;
- The PDSCH is scheduled by a designated DCI format, e.g., DCI format 1_2; and
- The PUCCH resource is activated with 2 TCI states.

Otherwise, the second repetition number may be used. In yet another embodiment, which repetition number to be used may be dynamically indicated in DCI.

*Handling of Collision between PUCCH and other Uplink Channels, Signals*

One or more of the PUCCH repetitions may overlap in time with other uplink channels and/or signals, including another PUCCH, Physical Uplink Shared Channel (PUSCH), Sounding Reference Signal (SRS), Physical Random Access Channel (PRACH). Then multiplexing and/or prioritization procedures apply to resolve the collision. The collision resolution procedure takes into account of the relative physical layer priority of the colliding uplink channels/signals, if different levels of physical layer priority are provided.

In one embodiment, if the UE is scheduled to transmit a PUCCH repetition as well as another overlapping UL channel signal with a same priority to a same TRP (e.g., TRP1), then the UE multiplexes them before transmitting to another TRP (e.g., TRP2). (note here that toward same TRP means the PUCCH and the other UL channel have same spatial relation reference, or use the same unified TCI state or use the same UL TCI state).

In another embodiment, if the UE is scheduled to transmit a PUCCH repetition as well as another overlapping UL channel signal to a same TRP, then the UE selects the channel (or signal) with higher priority to transmit, while dropping the channel (or signal) of lower priority.

In a case that the UE is scheduled to transmit a PUCCH repetition to TRP1 and another overlapping UL channel with lower priority to either TRP 1 or TRP2, then the other channel is dropped. If the overlapping UL channel has a higher priority, the PUCCH is dropped.

In another embodiment, if the UE is scheduled to transmit a PUCCH repetition to either TRP1 or TRP2 and another overlapping PUSCH with a same priority to TRP2, then the PUCCH is multiplexed with the PUSCH and transmitted to TRP2. In one embodiment, the uplink multiplexing and prioritization procedure is applied for the procedure of transmission towards each TRP (e.g. each spatial relation) separately and independently.

In another embodiment, uplink multiplexing and prioritization procedure considers the transmission to multiple TRP jointly. For example, if a PUCCH (with repetitions) and a PUSCH (with repetitions) overlap on both TRPs (e.g., TRP1 and TRP2), then PUCCH may be selected for transmission towards TRP1 (and PUSCH to TRP1 is dropped), and PUSCH may be selected for transmission towards TRP2 (and PUCCH to TRP2 is dropped). Examples are shown in Figures 14 and 15.

In another embodiment, collision of PUCCH with other UL channels/signals are handled separately for each PUCCH repetition (sub-slot-based repetition or slot-based repetition), also separately for each TRP.

*Handling of Symbols Invalid for PUCCH Transmission*

For PUCCH repetitions, it may happen that the resource intended for a transmission is an invalid resource. A resource may be an Orthogonal Frequency Division Multiplexing (OFDM) symbol or a resource element in this context.

The UE can determine or identified invalid symbol(s) for PUCCH repetitions due to numerous reasons. In principle, any symbols that cannot be counted as available for uplink transmission are invalid for PUCCH repetitions.

For Multi-TRP PUCCH transmission, while the PUCCH can be transmitted towards multiple TRPs for diversity, there are still scenarios where certain symbols cannot be used for PUCCH transmission. These symbols are called invalid symbols in discussion below. For a given invalid symbol, if it would otherwise have been used for PUCCH transmission for M-TRP #j, then this PUCCH repetition may be dropped or delayed, affecting the overall PUCCH transmission towards M-TRP #j.

In the following, numerous scenarios that cause symbols unavailable for uplink transmission (hence unavailable for PUCCH repetitions) are described for M-TRP. With "M-TRP" means that the UE is configured for uplink transmission where their reception is intended for more than one TRP, i.e., using multiple spatial relations, multiple UL TCI states or multiple unified TCI states.

In one example, a symbol that is indicated as downlink by tdd-UL-DL-ConfigurationCommon or tdd-UL-DL-ConfigurationDedicated is considered as an invalid symbol for PUCCH repetitions.

In another example, for operation in unpaired spectrum, symbols indicated by ssb-PositionsInBurst in System Information Block #1 (SIB1) or ssb-PositionsInBurst in ServingCellConfigCommon for reception of Synchronization Signal (SS)/Physical Broadcast Channel (PBCH) blocks are considered as invalid symbols for PUCCH repetitions.

In another example, for operation in unpaired spectrum, symbol(s) indicated by pdcch-ConfigSIB1 in MIB for a CORESET for Type0-PDCCH CSS set are considered as invalid symbol(s) for PUCCH repetitions.

In another example, for operation in unpaired spectrum, if numberInvalidSymbolsForDL-UL-Switching is configured, numberInvalidSymbolsForDL-UL-Switching symbol(s) after the last symbol that is indicated as downlink in each consecutive set of all symbols that are indicated as downlink by tdd-UL-DL-ConfigurationCommon or tdd-UL-DL-ConfigurationDedicated are considered as invalid symbol(s) for PUCCH repetitions. The symbol(s) given by numberInvalidSymbolsForDL-UL-Switching are defined using the reference SCS configuration referenceSubcarrierSpacing provided in tdd-UL-DL-ConfigurationCommon.

In another example, if the UE

- is configured with multiple serving cells and is configured to operate with half duplex (for example, *half-duplex-behavior-r16* = 'enable'), and
- is not capable of simultaneous transmission and reception on any of the multiple serving cells, and
- indicates support of capability for half-duplex operation in Carrier Aggregation (CA) with unpaired spectrum, and
- is not configured to monitor Physical Downlink Control Channel (PDCCH) for detection of DCI format 2-0 on any of the multiple serving cells,

then: a symbol is considered as an invalid symbol in any of the multiple serving cells for PUCCH repetitions if the symbol is indicated to the UE for reception of SS/PBCH blocks in any of the multiple serving cells by ssb-PositionsInBurst in SIB1 or ssb-PositionsInBurst in ServingCellConfigCommon.

In another example, a symbol is considered as an invalid symbol in any of the multiple serving cells for PUCCH repetitions if the UE is configured by higher layers to receive PDCCH, PDSCH, or CSI-RS on the reference cell in the symbol.

In another example, a symbol on a shared spectrum is considered as invalid if the UE has not obtained access to the channel, when required.

In another example, a symbol on a shared spectrum is considered as invalid if the symbol overlaps with the idle period corresponding to semi-static channel access procedure.

If a PUCCH repetition overlaps with any invalid symbols, then the overlapping PUCCH repetition cannot be transmitted as is.

- In one method, the PUCCH repetition overlapping with invalid symbol(s) is discarded. The remaining PUCCH repetitions are kept for potential transmission. The mapping between TRP and each PUCCH transmission occasion is according to the nominal PUCCH transmission occasions. For example, if 4 PUCCH repetitions are to be transmitted at time [ t1 t2 t3 t4] and the associated TRP indices are [ 1 2 1 2], and if an invalid symbol occurs at t2, then PUCCH transmission at t2 will be dropped and the actual PUCCH transmissions will occur at [ t1 t3 t4]. The associated TRP indices would be [ 1 1 2].

- In another method, the PUCCH repetition overlapping with invalid symbol(s) is delayed till the PUCCH repetition can be transmitted with at least n consecutive valid symbols within a slot. Here n is the duration of one PUCCH repetition counted in number of symbols. Subsequent PUCCH repetitions are delayed as well. In one variation, all PUCCH repetitions are transmitted, though delayed due to invalid symbols. In another variation, PUCCH repetitions are delayed and transmitted till a timing limit is reached.

*Timing impact of PUCCH repetition*

When PUCCH repetition is configured or indicated via DCI to be sent over multiple slots, the reference to PUCCH transmission slots shall be referring to the last slot of PUCCH repetition. For Media Access Control (MAC) Control element (CE) based activation command, e.g., for beam switch (i.e., TCI state update)), being received in PDSCH, the time at which the UE applies the command, e.g., the TCI state provided in the activation command, is based on the last slot among the multiple slots in which PUCCH is repeated.

For example, if PUCCH repetition is configured by higher layers or indicated via DCI to carry HARQ-ACK, and the UE receives a MAC CE command activating a TCI state, the UE shall apply the command according to the timing described below:

- After UE receives a MAC CE activation command for one of the TCI states, the UE applies the activation command in the first slot that is after slot $k + 3N_{slot}^{subframe,\mu}$ , where $k$ is the last slot where the UE would transmit a PUCCH with HARQ-ACK information with ACK for the PDSCH providing the activation command and $\mu$ is the SCS configuration for the PUCCH. The active BWP is defined as the active BWP in the slot when the activation command is applied.

In another example, if PUCCH repetition is used to carry HARQ ACK, and when a UE receives a MAC CE command to activating a SRS resource, the UE shall apply the command according to the timing described below:

- The UE applies corresponding actions in 38.321 and a corresponding setting for a spatial domain filter to transmit PUCCH in the first slot that is after slot $k + 3N_{slot}^{subframe,\mu}$ , where $k$ is the last slot where the UE would transmit a PUCCH with HARQ-ACK information with ACK value corresponding to a PDSCH reception providing the *PUCCH-SpatialRelationInfo* and $\mu$ is the SCS configuration for the PUCCH.

Similarly, in another embodiment, when PUCCH repetition is configured by higher layers or indicated via DCI, the time at which the UE applies the PDSCH RE mapping corresponding to the activated Zero Power (ZP) CSI-RS resource(s) provided by the 'SP ZP CSI-RS Resource Set Activation/Deactivation MAC CE' activation command in TS38.321 is based on the last slot among multiple slots in which PUCCH is repeated. The following is an example of how to capture this embodiment in 3GPP specifications:

*For a UE configured with a list of ZP-CSI-RS-ResourceSet(s) provided by higher layer parameter sp-ZP-CSI-RS-ResourceSetsToAddModList:*

- *when the UE would transmit a PUCCH with HARQ-ACK information in slot n where n is the last slot where the UE would transmit a PUCCH with HARQ-ACK information corresponding to the PDSCH carrying the activation command, as described in clause 6.1.3.19 of [10, TS 38.321], for ZP CSI-RS resource(s), the corresponding action in [10, TS 38.321] and the UE assumption on the PDSCH RE mapping corresponding to the activated ZP CSI-RS resource(s) shall be applied starting from the first slot that is after slot $n + 3N_{slot}^{subframe,\mu}$ where $\mu$ is the SCS configuration for the PUCCH.*

- *when the UE would transmit a PUCCH with HARQ-ACK information in slot n where n is the last slot where the UE would transmit a PUCCH with HARQ-ACK information corresponding to the PDSCH carrying the deactivation command, as described in clause 6.1.3.19 of [10, TS 38.321], for activated ZP CSI-RS resource(s), the corresponding*

*action in [10, TS 38.321] and the UE assumption on cessation of the PDSCH RE mapping corresponding to the de-*

*activated ZP CSI-RS resource(s) shall be applied starting from the first slot that is after slot* $n + 3N_{slot}^{subframe,\mu}$ *where $\mu$ is the SCS configuration for the PUCCH.*

Although the above embodiment is written with respect to 'SP ZP CSI-RS Resource Set Activation/Deactivation MAC CE' activation command, the embodiment can also be extended to the cases of the following MAC CE activation commands in TS 38.321:

- Enhanced TCI States Activation/Deactivation for UE-specific PDSCH MAC CE;
- SP CSI reporting on PUCCH Activation/Deactivation MAC CE;
- SP CSI-RS/CSI-IM Resource Set Activation/Deactivation MAC CE;
- SP SRS Activation/Deactivation MAC CE ;
- SP Positioning SRS Activation/Deactivation MAC CE; and
- Enhanced SP/AP SRS Spatial Relation Indication MAC CE.

Figure 16 illustrates the operation of a UE 712 and a base station 702 in accordance with at least some of the embodiments described above. Note that optional steps are represented by dashed lines/boxes. As illustrated, the base station 702 provides and the UE 712 receives a first configuration of a first relation and a second spatial relation for an uplink channel, and an indication of a number of transmission occasions/repetitions (step 1600). The uplink channel may be a PUCCH and more particular, may be one of PUCCH formats 0 to 4. As discussed above, the UE 712 may also receive, from the base station 702, a configuration of a gap symbol between adjacent transmission occasions/repetitions (step 1600A).

In addition, the base station 702 may also provide and the UE 712 may also receive a second configuration of multiple numbers of the transmission repetitions for the uplink channel (step 1602), wherein which repetition number to use depends on whether one or more of the following conditions are met:

a. 2 TCI states are indicated in the Transmission configuration indication field (if present) of the DCI scheduling the PDSCH
b. One of the DL multi-TRP PDSCH schemes (i.e., configured by a higher layer parameter RepetitionSchemeConfig-r16) is used for an associated PDSCH
c. The Priority indicator field (if present) of the DCI is set to "1"
d. The PDSCH is scheduled by DCI format 1_2
e. The PUCCH resource is activated with 2 TCI states
f. Certain UCI type carried by the PUCCH

As discussed above, in one embodiment, the repetition number to use for the uplink channel may also depend on a traffic type that the uplink channel is associated with.

As discussed above, in one embodiment, the UE 712 may also receive, from the base station 702, one or more configurations for determining the number of transmission repetitions, where the one of the one or more configurations are dynamically indicated in downlink control information, DCI (step 1602A).

The UE 712 then transmits the uplink channel, a number of times according to the number of transmission repetitions, in a first set of sub-slots according to the first spatial relation, and in a second set of sub-slots according to the second spatial relation (step 1604). The total number of sub-slots in the first set and the second set of sub-slots equals to the number of repetitions, where each sub-lot includes a number of OFDM symbols. In one embodiment, the first set and the second set of sub-slots are non-overlapping in time. In one embodiment, the first set and the second set of sub-slots are in a same slot. In one embodiment, the first set and the second set of sub-slots are either explicitly or implicitly configured. In one embodiment, time and frequency resource allocations in each sub-slot of the first set and the second set of sub-slots are the same (i.e., with a relative same starting symbol within a sub-slot, a same number of symbols and same resource blocks).

As discussed above, in one embodiment, the UE 712 may drop one transmission repetition when it is overlapping with another UL channel with a higher priority (step 1604A).

As discussed above, in one embodiment, the UE 712 may multiplex one transmission repetition with an overlapping UL channel with a same priority (step 1604A).

As discussed above, in one embodiment, the UE 712 may omit a corresponding transmission occasion if the UE 712 collides with an invalid symbol or may delay the corresponding transmission occasion until enough valid symbols are available (step 1604B).

As discussed above, in one embodiment, the UE 712 may receive a MAC CE command from the base station 702 (step 1606). And then, the UE 712 may adjust timing in applying the MAC CE command according to the slot or sub-slot over which the last PUCCH transmission carrying a corresponding HARQ-ACK associated with the MAC CE command is transmitted (step 1608).

Figure 17 is a schematic block diagram of a radio access node 1700 according to some embodiments of the present disclosure. Optional features are represented by dashed boxes. The radio access node 1700 may be, for example, a base station 702 or 706 or a network node that implements all or part of the functionality of the base station 702 or gNB described herein. As illustrated, the radio access node 1700 includes a control system 1702 that includes one or more processors 1704 (e.g., Central Processing Units (CPUs), Application Specific Integrated Circuits (ASICs), Field Programmable Gate Arrays (FPGAs), and/or the like), memory 1706, and a network interface 1708. The one or more processors 1704 are also referred to herein as processing circuitry. In addition, the radio access node 1700 may include one or more radio units 1710 that each includes one or more transmitters 1712 and one or more receivers 1714 coupled to one or more antennas 1716. The radio units 1710 may be referred to or be part of radio interface circuitry. In some embodiments, the radio unit(s) 1710 is external to the control system 1702 and connected to the control system 1702 via, e.g., a wired connection (e.g., an optical cable). However, in some other embodiments, the radio unit(s) 1710 and potentially the antenna(s) 1716 are integrated together with the control system 1702. The one or more processors 1704 operate to provide one or more functions of a radio access node 1700 as described herein. In some embodiments, the function(s) are implemented in software that is stored, e.g., in the memory 1706 and executed by the one or more processors 1704.

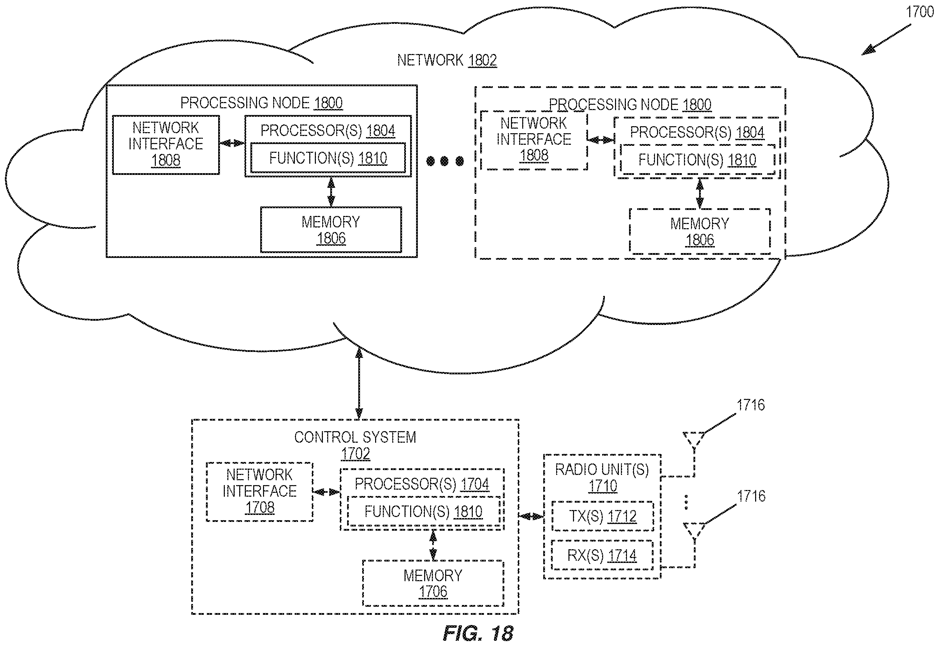

Figure 18 is a schematic block diagram that illustrates a virtualized embodiment of the radio access node 1700 according to some embodiments of the present disclosure. This discussion is equally applicable to other types of network nodes. Further, other types of network nodes may have similar virtualized architectures. Again, optional features are represented by dashed boxes.

As used herein, a "virtualized" radio access node is an implementation of the radio access node 1700 in which at least a portion of the functionality of the radio access node 1700 is implemented as a virtual component(s) (e.g., via a virtual machine(s) executing on a physical processing node(s) in a network(s)). As illustrated, in this example, the radio access node 1700 may include the control system 1702 and/or the one or more radio units 1710, as described above. The control system 1702 may be connected to the radio unit(s) 1710 via, for example, an optical cable or the like. The radio access node 1700 includes one or more processing nodes 1800 coupled to or included as part of a network(s) 1802. If present, the control system 1702 or the radio unit(s) are connected to the processing node(s) 1800 via the network 1802. Each processing node 1800 includes one or more processors 1804 (e.g., CPUs, ASICs, FPGAs, and/or the like), memory 1806, and a network interface 1808.

In this example, functions 1810 of the radio access node 1700 described herein are implemented at the one or more processing nodes 1800 or distributed across the one or more processing nodes 1800 and the control system 1702 and/or the radio unit(s) 1710 in any desired manner. In some particular embodiments, some or all of the functions 1810 of the radio access node 1700 described herein are implemented as virtual components executed by one or more virtual machines implemented in a virtual environment(s) hosted by the processing node(s) 1800. As will be appreciated by one of ordinary skill in the art, additional signaling or communication between the processing node(s) 1800 and the control system 1702 is used in order to carry out at least some of the desired functions 1810. Notably, in some embodiments, the control system 1702 may not be included, in which case the radio unit(s) 1710 communicates directly with the processing node(s) 1800 via an appropriate network interface(s).

In some embodiments, a computer program including instructions which, when executed by at least one processor, causes the at least one processor to carry out the functionality of radio access node 1700 or a node (e.g., a processing node 1800) implementing one or more of the functions 1810 of the radio access node 1700 in a virtual environment according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 19 is a schematic block diagram of the radio access node 1700 according to some other embodiments of the present disclosure. The radio access node 1700 includes one or more modules 1900, each of which is implemented in software. The module(s) 1900 provide the functionality of the radio access node 1700 described herein. This discussion is equally applicable to the processing node 1800 of Figure 18 where the modules 1900 may be implemented at one of the processing nodes 1800 or distributed across multiple processing nodes 1800 and/or distributed across the processing node(s) 1800 and the control system 1702.

Figure 20 is a schematic block diagram of a wireless communication device 2000 according to some embodiments of the present disclosure. The wireless communication device 2000 may be, for example, the UE 712 described herein. As illustrated, the wireless communication device 2000 includes one or more processors 2002 (e.g., CPUs, ASICs, FPGAs, and/or the like), memory 2004, and one or more transceivers 2006 each including one or more transmitters 2008 and one or more receivers 2010 coupled to one or more antennas 2012. The transceiver(s) 2006 includes radio-front end circuitry connected to the antenna(s) 2012 that is configured to condition signals communicated between the antenna(s) 2012 and the processor(s) 2002, as will be appreciated by on of ordinary skill in the art. The processors 2002 are also referred to herein as processing circuitry. The transceivers 2006 are also referred to herein as radio circuitry. In some embodiments, the functionality of the wireless communication device 2000 described above may be fully or partially implemented in software that is, e.g., stored in the memory 2004 and executed by the processor(s) 2002. Note that the wireless communication device 2000 may include additional components not illustrated in Figure 20 such as, e.g., one or more user interface components (e.g., an input/output interface including a display, buttons, a touch screen, a microphone, a speaker(s), and/or the like and/or any other components for allowing input of information into the wireless communication device 2000 and/or allowing output of information from the wireless communication device 2000), a power supply (e.g., a battery and associated power circuitry), etc.

In some embodiments, a computer program including instructions which, when executed by at least one processor, causes the at least one processor to carry out the functionality of the wireless communication device 2000 according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 21 is a schematic block diagram of the wireless communication device 2000 according to some other embodiments of the present disclosure. The wireless communication device 2000 includes one or more modules 2100, each of which is implemented in software. The module(s) 2100 provide the functionality of the wireless communication device 2000 described herein.

With reference to Figure 22, in accordance with an embodiment, a communication system includes a telecommunication network 2200, such as a 3GPP-type cellular network, which comprises an access network 2202, such as a RAN, and a core network 2204. The access network 2202 comprises a plurality of base stations 2206A, 2206B, 2206C, such as Node Bs, eNBs, gNBs, or other types of wireless Access Points (APs), each defining a corresponding coverage area 2208A, 2208B, 2208C. Each base station 2206A, 2206B, 2206C is connectable to the core network 2204 over a wired or wireless connection 2210. A first UE 2212 located in coverage area 2208C is configured to wirelessly connect to, or be paged by, the corresponding base station 2206C. A second UE 2214 in coverage area 2208A is wirelessly connectable to the corresponding base station 2206A. While a plurality of UEs 2212, 2214 are illustrated in this example, the disclosed embodiments are equally applicable to a situation where a sole UE is in the coverage area or where a sole UE is connecting to the corresponding base station 2206.

The telecommunication network 2200 is itself connected to a host computer 2216, which may be embodied in the hardware and/or software of a standalone server, a cloud-implemented server, a distributed server, or as processing resources in a server farm. The host computer 2216 may be under the ownership or control of a service provider, or may be operated by the service provider or on behalf of the service provider. Connections 2218 and 2220 between the telecommunication network 2200 and the host computer 2216 may extend directly from the core network 2204 to the host computer 2216 or may go via an optional intermediate network 2222. The intermediate network 2222 may be one of, or a combination of more than one of, a public, private, or hosted network; the intermediate network 2222, if any, may be a backbone network or the Internet; in particular, the intermediate network 2222 may comprise two or more sub-networks (not shown).

The communication system of Figure 22 as a whole enables connectivity between the connected UEs 2212, 2214 and the host computer 2216. The connectivity may be described as an Over-the-Top (OTT) connection 2224. The host computer 2216 and the connected UEs 2212, 2214 are configured to communicate data and/or signaling via the OTT connection 2224, using the access network 2202, the core network 2204, any intermediate network 2222, and possible further infrastructure (not shown) as intermediaries. The OTT connection 2224 may be transparent in the sense that the participating communication devices through which the OTT connection 2224 passes are unaware of routing of uplink and downlink communications. For example, the base station 2206 may not or need not be informed about the past routing of an incoming downlink communication with data originating from the host computer 2216 to be forwarded (e.g., handed over) to a connected UE 2212. Similarly, the base station 2206 need not be aware of the future routing of an outgoing uplink communication originating from the UE 2212 towards the host computer 2216.

Example implementations, in accordance with an embodiment, of the UE, base station, and host computer discussed in the preceding paragraphs will now be described with reference to Figure 23. In a communication system 2300, a host computer 2302 comprises hardware 2304 including a communication interface 2306 configured to set up and maintain a wired or wireless connection with an interface of a different communication device of the communication system 2300. The host computer 2302 further comprises processing circuitry 2308, which may have storage and/or processing capabilities. In particular, the processing circuitry 2308 may comprise one or more programmable processors, ASICs, FPGAs, or combinations of these (not shown) adapted to execute instructions. The host computer 2302 further comprises software 2310, which is stored in or accessible by the host computer 2302 and executable by the processing circuitry 2308. The software 2310 includes a host application 2312. The host application 2312 may be operable to provide a service to a remote user, such as a UE 2314 connecting via an OTT connection 2316 terminating at the UE 2314 and the host computer 2302. In providing the service to the remote user, the host application 2312 may provide user data which is transmitted using the OTT connection 2316.

The communication system 2300 further includes a base station 2318 provided in a telecommunication system and comprising hardware 2320 enabling it to communicate with the host computer 2302 and with the UE 2314. The hardware 2320 may include a communication interface 2322 for setting up and maintaining a wired or wireless connection with an interface of a different communication device of the communication system 2300, as well as a radio interface 2324 for setting up and maintaining at least a wireless connection 2326 with the UE 2314 located in a coverage area (not shown in Figure 23) served by the base station 2318. The communication interface 2322 may be configured to facilitate a connection 2328 to the host computer 2302. The connection 2328 may be direct or it may pass through a core network (not shown in Figure 23) of the telecommunication system and/or through one or more intermediate networks outside the telecommunication system. In the embodiment shown, the hardware 2320 of the base station 2318 further includes processing circuitry 2330, which may comprise one or more programmable processors, ASICs, FPGAs, or combinations of these (not shown) adapted to execute instructions. The base station 2318 further has software 2332 stored internally or accessible via an external connection.

The communication system 2300 further includes the UE 2314 already referred to. The UE's 2314 hardware 2334 may include a radio interface 2336 configured to set up and maintain a wireless connection 2326 with a base station serving a coverage area in which the UE 2314 is currently located. The hardware 2334 of the UE 2314 further includes processing circuitry 2338, which may comprise one or more programmable processors, ASICs, FPGAs, or combinations of these (not shown) adapted to execute instructions. The UE 2314 further comprises software 2340, which is stored in or accessible by the UE 2314 and executable by the processing circuitry 2338. The software 2340 includes a client application 2342. The client application 2342 may be operable to provide a service to a human or non-human user via the UE 2314, with the support of the host computer 2302. In the host computer 2302, the executing host application 2312 may communicate with the executing client application 2342 via the OTT connection 2316 terminating at the UE 2314 and the host computer 2302. In providing the service to the user, the client application 2342 may receive request data from the host application 2312 and provide user data in response to the request data. The OTT connection 2316 may transfer both the request data and the user data. The client application 2342 may interact with the user to generate the user data that it provides.

It is noted that the host computer 2302, the base station 2318, and the UE 2314 illustrated in Figure 23 may be similar or identical to the host computer 2216, one of the base stations 2206A, 2206B, 2206C, and one of the UEs 2212, 2214 of Figure 22, respectively. This is to say, the inner workings of these entities may be as shown in Figure 23 and independently, the surrounding network topology may be that of Figure 22.

In Figure 23, the OTT connection 2316 has been drawn abstractly to illustrate the communication between the host computer 2302 and the UE 2314 via the base station 2318 without explicit reference to any intermediary devices and the precise routing of messages via these devices. The network infrastructure may determine the routing, which may be configured to hide from the UE 2314 or from the service provider operating the host computer 2302, or both. While the OTT connection 2316 is active, the network infrastructure may further take decisions by which it dynamically changes the routing (e.g., on the basis of load balancing consideration or reconfiguration of the network).

The wireless connection 2326 between the UE 2314 and the base station 2318 is in accordance with the teachings of the embodiments described throughout this disclosure. One or more of the various embodiments improve the performance of OTT services provided to the UE 2314 using the OTT connection 2316, in which the wireless connection 2326 forms the last segment. More precisely, the teachings of these embodiments may improve the utilization of PUCCH, and thereby provide benefits such as enhancing reliability of the PUCCH, keeping the latency low, and/or saving UE power consumption.

A measurement procedure may be provided for the purpose of monitoring data rate, latency, and other factors on which the one or more embodiments improve. There may further be an optional network functionality for reconfiguring the OTT connection 2316 between the host computer 2302 and the UE 2314, in response to variations in the measurement results. The measurement procedure and/or the network functionality for reconfiguring the OTT connection 2316 may be implemented in the software 2310 and the hardware 2304 of the host computer 2302 or in the software 2340 and the hardware 2334 of the UE 2314, or both. In some embodiments, sensors (not shown) may be deployed in or in association with communication devices through which the OTT connection 2316 passes; the sensors may participate in the measurement procedure by supplying values of the monitored quantities exemplified above, or supplying values of other physical quantities from which the software 2310, 2340 may compute or estimate the monitored quantities. The reconfiguring of the OTT connection 2316 may include message format, retransmission settings, preferred routing, etc.; the reconfiguring need not affect the base station 2318, and it may be unknown or imperceptible to the base station 2318. Such procedures and functionalities may be known and practiced in the art. In certain embodiments, measurements may involve proprietary UE signaling facilitating the host computer 2302's measurements of throughput, propagation times, latency, and the like. The measurements may be implemented in that the software 2310 and 2340 causes messages to be transmitted, in particular empty or 'dummy' messages, using the OTT connection 2316 while it monitors propagation times, errors, etc.

Figure 24 is a flowchart illustrating a method implemented in a communication system, in accordance with one embodiment. The communication system includes a host computer, a base station, and a UE which may be those described with reference to Figures 22 and 23. For simplicity of the present disclosure, only drawing references to Figure 24 will be included in this section. In step 2400, the host computer provides user data. In sub-step 2402 (which may be optional) of step 2400, the host computer provides the user data by executing a host application. In step 2404, the host computer initiates a transmission carrying the user data to the UE. In step 2406 (which may be optional), the base station transmits to the UE the user data which was carried in the transmission that the host computer initiated, in accordance with the teachings of the embodiments described throughout this disclosure. In step 2408 (which may also be optional), the UE executes a client application associated with the host application executed by the host computer.

Figure 25 is a flowchart illustrating a method implemented in a communication system, in accordance with one embodiment. The communication system includes a host computer, a base station, and a UE which may be those described with reference to Figures 22 and 23. For simplicity of the present disclosure, only drawing references to Figure 25 will be included in this section. In step 2500 of the method, the host computer provides user data. In an optional sub-step (not shown) the host computer provides the user data by executing a host application. In step 2502, the host computer initiates a transmission carrying the user data to the UE. The transmission may pass via the base station, in accordance with the teachings of the embodiments described throughout this disclosure. In step 2504 (which may be optional), the UE receives the user data carried in the transmission.

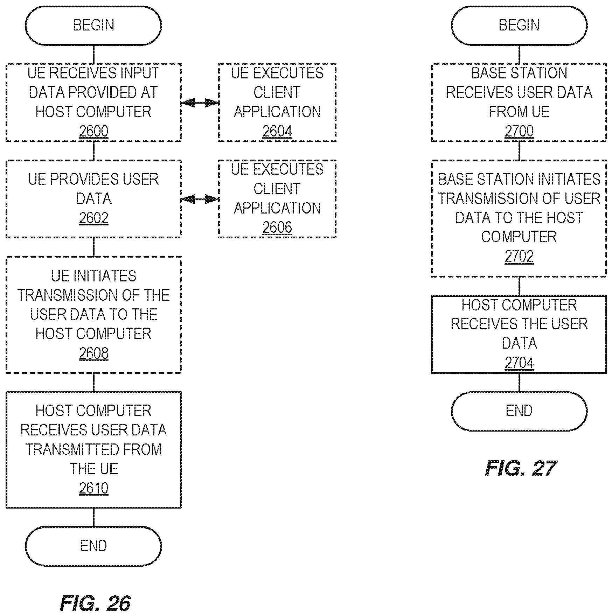

Figure 26 is a flowchart illustrating a method implemented in a communication system, in accordance with one embodiment. The communication system includes a host computer, a base station, and a UE which may be those described with reference to Figures 22 and 23. For simplicity of the present disclosure, only drawing references to Figure 26 will be included in this section. In step 2600 (which may be optional), the UE receives input data provided by the host computer. Additionally or alternatively, in step 2602, the UE provides user data. In sub-step 2604 (which may be optional) of step 2600, the UE provides the user data by executing a client application. In sub-step 2606 (which may be optional) of step 2602, the UE executes a client application which provides the user data in reaction to the received input data provided by the host computer. In providing the user data, the executed client application may further consider user input received from the user. Regardless of the specific manner in which the user data was provided, the UE initiates, in sub-step 2608 (which may be optional), transmission of the user data to the host computer. In step 2610 of the method, the host computer receives the user data transmitted from the UE, in accordance with the teachings of the embodiments described throughout this disclosure.

Figure 27 is a flowchart illustrating a method implemented in a communication system, in accordance with one embodiment. The communication system includes a host computer, a base station, and a UE which may be those described with reference to Figures 22 and 23. For simplicity of the present disclosure, only drawing references to Figure 27 will be included in this section. In step 2700 (which may be optional), in accordance with the teachings of the embodiments described throughout this disclosure, the base station receives user data from the UE. In step 2702 (which may be optional), the base station initiates transmission of the received user data to the host computer. In step 2704 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

While processes in the figures may show a particular order of operations performed by certain embodiments of the present disclosure, it should be understood that such order is exemplary (e.g., alternative embodiments may perform the operations in a different order, combine certain operations, overlap certain operations, etc.).

At least some of the following abbreviations may be used in this disclosure. If there is an inconsistency between abbreviations, preference should be given to how it is used above. If listed multiple times below, the first listing should be preferred over any subsequent listing(s).

- 3GPP          Third Generation Partnership Project

(continued)

| | |
|---|---|
| • 5G | Fifth Generation |
| • 5GC | Fifth Generation Core |
| • 5GS | Fifth Generation System |
| • ACK | Acknowledgement |
| • AF | Application Function |
| • AMF | Access and Mobility Function |
| • AN | Access Network |
| • AP | Access Point |
| • ASIC | Application Specific Integrated Circuit |
| • AUSF | Authentication Server Function |
| • BWP | Bandwidth Part |
| • CE | Control Element |
| • CP-OFDM | Cyclic Prefix Orthogonal Frequency Division Multiplexing |
| • CPU | Central Processing Unit |
| • CRC | Cyclic Redundancy Check |
| • DCI | Downlink Control Information |
| • DFT | Discrete Fourier Transform |
| • DL | Downlink |
| • DN | Data Network |
| • DSP | Digital Signal Processor |
| • eNB | Enhanced or Evolved Node B |
| • EPS | Evolved Packet System |
| • E-UTRA | Evolved Universal Terrestrial Radio Access |
| • FDM | Frequency Domain Multiplexing |
| • FH | Frequency Hopping |
| • FPGA | Field Programmable Gate Array |
| • gNB | New Radio Base Station |
| • gNB-DU | New Radio Base Station Distributed Unit |
| • HARQ | Hybrid Automatic Repeat Request |
| • HSS | Home Subscriber Server |
| • IoT | Internet of Things |
| • IP | Internet Protocol |
| • LTE | Long Term Evolution |
| • MAC | Media Access Control |
| • MME | Mobility Management Entity |
| • MTC | Machine Type Communication |
| • NACK | Non-acknowledgement |
| • NEF | Network Exposure Function |
| • NF | Network Function |
| • NR | New Radio |
| • NRF | Network Function Repository Function |
| • NSSF | Network Slice Selection Function |
| • OCC | Orthogonal Cover Code |
| • OFDM | Orthogonal Frequency Division Multiplexing |
| • OTT | Over-the-Top |
| • PC | Personal Computer |
| • PCF | Policy Control Function |
| • PDCCH | Physical Downlink Control Channel |
| • PDSCH | Physical Downlink Shared Channel |
| • P-GW | Packet Data Network Gateway |
| • PRB | Physical Resource Block |

(continued)

| | |
|---|---|
| • PUCCH | Physical Uplink Control Channel |
| • PUSCH | Physical Uplink Shared Channel |
| • QoS | Quality of Service |
| • RAM | Random Access Memory |
| • RB | Resource Block |
| • RE | Resource Element |
| • RM | Reed-Muller |
| • RAN | Radio Access Network |
| • ROM | Read Only Memory |
| • RRC | Radio Resource Control |
| • RRH | Remote Radio Head |
| • RS | Reference Signal |
| • RTT | Round Trip Time |
| • SCEF | Service Capability Exposure Function |
| • SDM | Spatial Division Multiplexing |
| • SMF | Session Management Function |
| • SSB | Synchronization Signal Block |
| • SRS | Sounding Reference Signal |
| • TDM | Time Domain Multiplexing |
| • TRP | Transmission and Reception Points |
| • UCI | Uplink Control Information |
| • UDM | Unified Data Management |
| • UE | User Equipment |
| • UL | Uplink |
| • UPF | User Plane Function |
| • URLLC | Ultra-Reliable Low Latency |

**Claims**

1. A method of uplink transmission, performed by a User Equipment, UE, (712) in a wireless communication network that includes two or more Transmission and Receiving Points, TRPs, each associated with a spatial relation or a Transmission Configuration Indication, TCI, state, the method comprising:

   • receiving (1600), from a base station (702) in the wireless communication network, a configuration of a first spatial relation and a second spatial relation or a configuration of a first TCI state and a second TCI state for an uplink channel resource, and an indication of N transmission repetitions of the uplink channel, wherein:

   ◦ N is an integer greater than one; and
   ◦ the first spatial relation and the second spatial relation or the first TCI state and the second TCI state are configured to form a mapping pattern over the transmission repetitions of the uplink channel, wherein the mapping pattern is cyclic mapping or sequential mapping;

   • receiving a Downlink, DL, Control Information, DCI, that indicates the uplink channel resource used for the transmission repetitions of the uplink channel; and
   • transmitting (1604) the uplink channel in N consecutive sub-slots in the uplink channel resource, and according to the mapping pattern, applying the first spatial relation or the first TCI state to the uplink channel transmission repetitions in a first subset of the sub-slots and applying the second spatial relation or the second TCI state to the uplink channel transmission repetitions in a second subset of the sub-slots.

2. The method of claim 1 wherein:

   - a total number of sub-slots in the first subset of the sub-slots and the second subset of the sub-slots is equal to the number of transmission repetitions; and/or
- the first subset of the sub-slots and the second subset of the sub-slots are in a same slot; and/or
- each of the sub-slots comprises a number of Orthogonal Frequency Division Multiplexing, OFDM, symbols; and/or
- the first subset of the sub-slots and the second subset of the sub-slots are non-overlapping in time; and/or
- the same uplink channel resource is allocated in each of the sub-slots; and/or
- the uplink channel is one of Physical Uplink Control Channel, PUCCH, formats 0 to 4; and/or
- the first subset of the sub-slots includes one or more sub-slots, and the second subset of the sub-slots includes one or more sub-slots.

3. The method of claim 1 or 2 further comprising:

- receiving (1602), from the base station (702), a second configuration of multiple numbers of transmission repetitions for the uplink channel, wherein the number of transmission repetitions of the uplink channel is selected from the multiple numbers of transmission repetitions for the uplink channel depending on whether one or more of the following conditions are met: two TCI states are indicated in a transmission configuration indication field of a DCI format scheduling an associated Physical Downlink Shared Channel, PDSCH, for which a corresponding Hybrid Automatic Repeat Request Acknowledgement, HARQ-ACK, is carried on the uplink channel; an associated PDSCH corresponds to a particular PDSCH scheme; a priority indicator field of a DCI scheduling an associated PDSCH is set to "1"; an associated PDSCH is scheduled by DCI format 1_2; the resource for the uplink channel is activated with two TCI states; and a certain Uplink, UL, Control Information, UCI, type is carried by the uplink channel; or
- receiving (1602), from the base station (702), a second configuration of multiple numbers of the transmission repetitions for the uplink channel, wherein the number of transmission repetitions of the uplink channel is selected from the multiple numbers of transmission repetitions for the uplink channel depending on a traffic type that the uplink channel is associated with; or
- receiving (1602A), from the base station (702), one or more configurations for selecting the number of transmission repetitions of the uplink channel, wherein one of the one or more configurations is dynamically indicated in the DCI.

4. The method of any one of claims 1 to 3 further comprising:

- dropping (1604A) one transmission repetition of the uplink channel when such transmission repetition of the uplink channel is overlapping with another uplink channel with a higher priority; or
- multiplexing (1604A) one transmission repetition of the uplink channel with another overlapping uplink channel with a same priority; or
- omitting (1604B) a corresponding transmission repetition if the transmission collides with an invalid symbol; or
- if a transmission collides with an invalid symbol, delaying (1604B) a corresponding transmission repetition until enough valid symbols are available.

5. The method of any one of claims 1 to 4, wherein:

- the method further comprises, if the uplink channel carrying a HARQ-ACK corresponding to a PDSCH carrying a Media Access Control, MAC, Control Clement, CE, command from the base station (702) is transmitted in slot n, applying the MAC CE command starting from a first slot 3 milli-seconds after slot n; or
- the configuration can be via a Radio Resource Control, RRC, message, a MAC CE command or both.

6. A method of uplink transmission, performed by a base station (702), in a wireless communication network that includes two or more Transmission and Receiving Points, TRPs, each associated with a spatial relation or Transmission Configuration Indication, TCI state, the method comprising:

• providing (1600), to a user equipment, UE, (712) in the wireless communication network, a configuration of a first spatial relation and a second spatial relation or a configuration of a first TCI state and a second TCI state for an uplink channel resource, and an indication of N transmission repetitions for transmitting the uplink channel, wherein:

  ◦ N is an integer greater than one; and
  ◦ the first spatial relation and the second spatial relation or the first TCI state and the second TCI state are configured to form a mapping pattern over the transmission repetitions of the uplink channel, wherein the mapping pattern is cyclic mapping or sequential mapping; and

• providing a Downlink, DL, Control Information, DCI, to the UE (712), that indicates the uplink channel resource used for the transmission repetitions of the uplink channel.

7. The method of any one of claims 1 to 6 wherein:

- each of the first TCI state and the second TCI state is one of: a unified TCI state that can be used for both downlink and uplink channel transmissions; and an uplink TCI state that can be used only for uplink channel transmissions; and/or
- the uplink channel is a Physical Uplink Control Channel, PUCCH.

8. The method of any one of claims 1 to 7 wherein:

- each of the first spatial relation and the second spatial relation comprises one or more of: a Synchronization Signal Block, SSB, index, a Channel State Information Reference Signal, CSI-RS, index, or a Sounding Reference Signal, SRS, index, used to determine a spatial filter to be used for uplink channel transmission; a pathloss reference signal index, and one or more power control parameters; or
- each of the first TCI state and the second TCI state comprises one or more of: a Synchronization Signal Block, SSB, index, a Channel State Information Reference Signal, CSI-RS, index, or a Sounding Reference Signal, SRS, index, used to determine a spatial filter to be used for uplink channel transmission; a pathloss reference signal index, and one or more power control parameters.

9. The method of any one of claims 1 to 8 wherein:

- the cyclic mapping of the first spatial relation and the second spatial relation or the cyclic mapping of the first TCI state and the second TCI state is configured over the repetitions of the uplink channel, wherein the first spatial relation or the first TCI state is applied to every other repetition of the uplink channel starting from the first repetition and the second spatial relation or the second TCI state is applied to the remaining repetitions; or
- the sequential mapping of the first spatial relation and the second spatial relation or the sequential mapping of the first TCI state and the second TCI state is configured over the repetitions of the uplink channel, wherein the first spatial relation or first TCI state is applied to every other two consecutive repetitions in time of the uplink channel starting from the first two consecutive repetitions and the second spatial relation or second TCI state is applied to the remaining repetitions.

10. The method of claim 6 or any one of claims 7 to 9 when dependent on claim 6, further comprising:

- providing (1602), to the UE (712), a second configuration of multiple numbers of transmission repetitions for the uplink channel, wherein the number of transmission repetitions of the uplink channel is selected from the multiple numbers of transmission repetitions for the uplink channel depending on whether one or more of the following conditions are met: two TCI states are indicated in a transmission configuration indication field of a DCI format scheduling an associated Physical Downlink Shared Channel, PDSCH, for which a corresponding Hybrid Automatic Repeat Request Acknowledgement, HARQ-ACK, is carried on the uplink channel; an associated PDSCH corresponds to a particular PDSCH scheme; a priority indicator field of a DCI scheduling an associated PDSCH is set to °1"; an associated PDSCH is scheduled by DCI format 1_2; the resource for the uplink channel is activated with two TCI states; and a certain Uplink, UL, Control Information, UCI, type is carried by the uplink channel; or
- providing (1602), to the UE (712), a second configuration of multiple numbers of the transmission repetitions for the uplink channel, wherein the number of transmission repetitions of the uplink channel is selected from the multiple numbers of transmission repetitions for the uplink channel depending on a traffic type the uplink channel is associated with; or
- providing (1602A), to the UE (712), one or more configurations for selecting the number of transmission repetitions of the uplink channel, wherein one of the one or more configurations is dynamically indicated in the DCI.

11. The method of any one of claims 1 to 10 wherein an Uplink, UL, Control Information, UCI is carried by the uplink channel.

**12.** The method of claim 11 wherein the number of transmission repetitions of the uplink channel varies with a type of the UCI,

wherein, optionally, the type of the UCI is one of: Hybrid Automatic Repeat Request, HARQ, Acknowledgement, ACK, Scheduling Request, SR, Channel State Information, CSI, or two or more of HARQ-ACK, SR, and CSI multiplexed together.

**13.** A User Equipment, UE, (712, 2000) adapted to communicate in a wireless communication network that includes two or more Transmission and Receiving Points, TRPs, each associated with a spatial relation or Transmission Configuration Indication, TCI state, the UE adapted to perform the method of:

- any of claims 1 to 5;
- any of claims 7 to 9 when dependent on claim 1; or
- claim 11 or 12 when dependent on claim 1.

**14.** A base station (702, 1700) adapted to communicate in a wireless communication network that includes two or more Transmission and Receiving Points, TRPs, each associated with a spatial relation or Transmission Configuration Indication, TCI state, the base station (702) adapted to perform the method of:

- claim 6;
- any of claims 7 to 9 when dependent on claim 6;
- claim 10; or
- claim 11 or 12 when dependent claim 6.

**15.** A computer-readable medium (1706, 2004) comprising instructions which:

- when executed on a processor (2002) of a user equipment (712, 2000), cause the processor to perform the method according to:

-- any of claims 1 to 5,
-- any of claims 7 to 9 when dependent on claim 1, or
-- claim 11 or 12 when dependent on claim 1; or

- when executed on a processor (1704) of a base station (702, 1700), cause the processor to perform the steps of a method according to:

-- claim 6,
-- any of claims 7 to 9 when dependent on claim 6,
-- claim 10, or
-- claim 11 or 12 when dependent claim 6.

**Patentansprüche**

**1.** Verfahren zur Uplink-Übertragung, durchgeführt durch ein Benutzergerät, UE, (712), in einem drahtlosen Kommunikationsnetzwerk, das zwei oder mehr Übertragungs- und Empfangspunkte, TRP, umfasst, von denen jeder mit einer räumlichen Beziehung oder einem Übertragungskonfigurationsangabezustand, TCI-Zustand, assoziiert ist, wobei das Verfahren Folgendes umfasst:

• Empfangen (1600), von einer Basisstation (702) in dem drahtlosen Kommunikationsnetzwerk, einer Konfiguration einer ersten räumlichen Beziehung und einer zweiten räumlichen Beziehung oder einer Konfiguration eines ersten TCI-Zustands und eines zweiten TCI-Zustands für eine Uplink-Kanalressource und einer Angabe von N Übertragungswiederholungen des Uplink-Kanals, wobei:

◦ N eine ganze Zahl größer als eins ist; und
◦ die erste räumliche Beziehung und die zweite räumliche Beziehung oder der erste TCI-Zustand und der zweite TCI-Zustand dazu konfiguriert sind, ein Zuordnungsmuster über die Übertragungswiederholungen des Uplink-Kanals zu bilden, wobei das Zuordnungsmuster eine zyklische Zuordnung oder eine sequentielle Zuordnung ist;

• Empfangen von Downlink-, DL, Steuerinformationen, DCI, die die Uplink-Kanalressource, die für die Übertragungswiederholungen des Uplink-Kanals verwendet wird, angeben; und

• Übertragen (1604) des Uplink-Kanals in N aufeinanderfolgenden Teil-Slots in der Uplink-Kanalressource und, gemäß dem Zuordnungsmuster, Anwenden der ersten räumlichen Beziehung oder des ersten TCI-Zustands auf die Übertragungswiederholungen des Uplink-Kanals in einem ersten Teilsatz der Teil-Slots und Anwenden der zweiten räumlichen Beziehung oder des zweiten TCI-Zustands auf die Übertragungswiederholungen des Uplink-Kanals in einem zweiten Teilsatz der Teil-Slots.

2. Verfahren nach Anspruch 1, wobei:

- eine Gesamtzahl von Teil-Slots in dem ersten Teilsatz der Teil-Slots und dem zweiten Teilsatz der Teil-Slots gleich der Zahl von Übertragungswiederholungen ist; und/oder
- sich der erste Teilsatz der Teil-Slots und der zweite Teilsatz der Teil-Slots in einem gleichen Slot befinden; und/oder
- jeder der Teil-Slots eine Zahl von Symbolen des orthogonalen Frequenzmultiplexverfahrens, OFDM, umfasst; und/oder
- sich der erste Teilsatz der Teil-Slots und der zweite Teilsatz der Teil-Slots nicht zeitlich überlappen; und/oder
- die gleiche Uplink-Kanalressource in jedem der Teil-Slots zugewiesen ist; und/oder
- der Uplink-Kanal einer der Formate 0 bis 4 des physikalischen Uplink-Steuerkanals, PUCCH, ist; und/oder
- der erste Teilsatz der Teil-Slots einen oder mehrere Teil-Slots beinhaltet und der zweite Teilsatz der Teil-Slots einen oder mehrere Teil-Slots beinhaltet.

3. Verfahren nach Anspruch 1 oder 2, ferner umfassend:

- Empfangen (1602), von der Basisstation (702), einer zweiten Konfiguration von einer Mehrzahl von Übertragungswiederholungen für den Uplink-Kanal, wobei die Zahl von Übertragungswiederholungen für den Uplink-Kanal aus der Mehrzahl von Übertragungswiederholungen für den Uplink-Kanal abhängig davon ausgewählt wird, ob eine oder mehrere der folgenden Bedingungen erfüllt sind: zwei TCI-Zustände sind in einem Übertragungskonfigurationsangabefeld für ein DCI-Format angegeben, das einen assoziierten gemeinsamen physikalischen Downlink-Kanal, PDSCH, plant, für den eine entsprechende hybride automatische Wiederholungsanfrage-Bestätigung, HARQ-ACK, auf dem Uplink-Kanal getragen wird; ein assoziierter PDSCH entspricht einem bestimmten PDSCH-Schema; ein Prioritätsangabefeld von DCI, die ein assoziiertes PDSCH-Schema planen, ist auf "1" gesetzt; ein assoziierter PDSCH ist durch das DCI-Format 1_2 geplant; die Ressource für den Uplink-Kanal ist mit zwei TCI-Zuständen aktiviert; und eine gewisse Art von Uplink-, UL, Steuerinformationen, UCI, wird von dem Uplink-Kanal getragen; oder
- Empfangen (1602), von der Basisstation (702), einer zweiten Konfiguration von einer Mehrzahl der Übertragungswiederholungen für den Uplink-Kanal, wobei die Zahl von Übertragungswiederholungen für den Uplink-Kanal aus der Mehrzahl von Übertragungswiederholungen für den Uplink-Kanal abhängig von einer Art des Datenverkehrs, mit der der Uplink-Kanal assoziiert ist, ausgewählt wird; oder
- Empfangen (1602A), von der Basisstation (702), einer oder mehrerer Konfigurationen zum Auswählen der Zahl von Übertragungswiederholungen des Uplink-Kanals, wobei eine der einen oder der mehreren Konfigurationen dynamisch in den DCI angegeben ist.

4. Verfahren nach einem der Ansprüche 1 bis 3, ferner umfassend:

- Fallenlassen (1604A) einer Übertragungswiederholung des Uplink-Kanals, wenn solch eine Übertragungswiederholung des Uplink-Kanals einen anderen Uplink-Kanal mit einer höheren Priorität überlappt; oder
- Multiplexen (1604A) einer Übertragungswiederholung des Uplink-Kanals mit einem anderen überlappenden Uplink-Kanal mit einer gleichen Priorität; oder
- Weglassen (1604B) einer entsprechenden Übertragungswiederholung, wenn die Übertragung mit einem ungültigen Symbol kollidiert; oder
- wenn eine Übertragung mit einem ungültigen Symbol kollidiert, Verzögern (1604B) einer entsprechenden Übertragungswiederholung bis ausreichend gültige Symbole verfügbar sind.

5. Verfahren nach einem der Ansprüche 1 bis 4, wobei:

- das Verfahren ferner, wenn der Uplink-Kanal, der eine HARQ-ACK trägt, die einem PDSCH entspricht, der einen Medienzugriffssteuerungs-, MAC, Steuerelement-, CE, Befehl von der Basisstation (702) trägt, in Slot N übertragen wird, Anwenden des MAC-CE-Befehls beginnend bei einem ersten Slot 3 Millisekunden nach Slot N umfasst; oder

- die Konfiguration über eine Funkressourcensteuerungs-, RRC, Nachricht, einen MAC-CE-Befehl oder beides erfolgen kann.

6. Verfahren zur Uplink-Übertragung, durchgeführt durch eine Basisstation (702) in einem drahtlosen Kommunikationsnetzwerk, das zwei oder mehr Übertragungs- und Empfangspunkte, TRP, umfasst, von denen jeder mit einer räumlichen Beziehung oder einem Übertragungskonfigurationsangabezustand, TCI-Zustand, assoziiert ist, wobei das Verfahren Folgendes umfasst:

• Bereitstellen (1600), an ein Benutzergerät, UE, (712) in dem drahtlosen Kommunikationsnetzwerk, einer Konfiguration einer ersten räumlichen Beziehung und einer zweiten räumlichen Beziehung oder einer Konfiguration eines ersten TCI-Zustands und eines zweiten TCI-Zustands für eine Uplink-Kanalressource und einer Angabe von N Übertragungswiederholungen zum Übertragen des Uplink-Kanals, wobei:

◦ N eine ganze Zahl größer als eins ist; und
◦ die erste räumliche Beziehung und die zweite räumliche Beziehung oder der erste TCI-Zustand und der zweite TCI-Zustand dazu konfiguriert sind, ein Zuordnungsmuster über die Übertragungswiederholungen des Uplink-Kanals zu bilden, wobei das Zuordnungsmuster eine zyklische Zuordnung oder eine sequentielle Zuordnung ist; und

• Bereitstellen von Downlink-, DL, Steuerinformationen, DCI, an das UE (712), die die Uplink-Kanalressource, die für die Übertragungswiederholungen des Uplink-Kanals verwendet wird, angeben.

7. Verfahren nach einem der Ansprüche 1 bis 6, wobei:

- jeder des ersten TCI-Zustands und des zweiten TCI-Zustands einer ist von: einem einheitlichen TCI-Zustand, der für sowohl Downlink- als auch Uplink-Kanalübertragungen verwendet werden kann; und einem Uplink-TCI-zustand, der nur für Uplink-Kanalübertragungen verwendet werden kann; und/oder
- der Uplink-Kanal ein physikalischer Uplink-Steuerkanal, PUCCH, ist.

8. Verfahren nach einem der Ansprüche 1 bis 7, wobei:

- jede der ersten räumlichen Beziehung und der zweiten räumlichen Beziehung einen oder mehrere umfasst von: einem Synchronisierungssignalblockindex, SSB-Index, einem Kanalzustandsinformationsreferenzsignalindex, CSI-RS-Index, oder einem Sondierungsreferenzsignalindex, SRS-Index, der zum Bestimmen eines räumlichen Filters verwendet wird, der für Uplink-Kanalübertragungen verwendet wird; einem Pfadverlustreferenzsignalindex und einem oder mehreren Leistungssteuerparametern; oder
- jeder des ersten TCI-Zustands und des zweiten TCI-Zustands einen oder mehrere umfasst von: einem Synchronisierungssignalblockindex, SSB-Index, einem Kanalzustandsinformationsreferenzsignalindex, CSI-RS-Index, oder einem Sondierungsreferenzsignalindex, SRS-Index, der zum Bestimmen eines räumlichen Filters verwendet wird, der für Uplink-Kanalübertragungen verwendet wird; einem Pfadverlustreferenzsignalindex und einem oder mehreren Leistungssteuerparametern.

9. Verfahren nach einem der Ansprüche 1 bis 8, wobei:

- die zyklische Zuordnung der ersten räumlichen Beziehung und der zweiten räumlichen Beziehung oder die zyklische Zuordnung des ersten TCI-Zustands und des zweiten TCI-Zustands über die Wiederholungen des Uplink-Kanals konfiguriert wird, wobei die erste räumliche Beziehung oder der erste TCI-Zustand auf jede zweite Wiederholung des Uplink-Kanals, beginnend bei der ersten Wiederholung, angewendet wird und die zweite räumliche Beziehung oder der zweite TCI-Zustand auf die verbleibenden Wiederholungen des Uplink-Kanals angewendet wird; oder
- die sequentielle Zuordnung der ersten räumlichen Beziehung und der zweiten räumlichen Beziehung oder die sequentielle Zuordnung des ersten TCI-Zustands und des zweiten TCI-Zustands über die Wiederholungen des Uplink-Kanals konfiguriert wird, wobei die erste räumliche Beziehung oder der erste TCI-Zustand auf jede zwei zeitlich aufeinanderfolgenden zwei Wiederholungen des Uplink-Kanals, beginnend bei den ersten zwei aufeinanderfolgenden Wiederholungen, angewendet wird und die zweite räumliche Beziehung oder der zweite TCI-Zustand auf die verbleibenden Wiederholungen des Uplink-Kanals angewendet wird.

**10.** Verfahren nach Anspruch 6 oder nach einem der Ansprüche 7 bis 9 in Abhängigkeit von Anspruch 6, ferner umfassend:

- Bereitstellen (1602), an das UE (712), einer zweiten Konfiguration von einer Mehrzahl von Übertragungswiederholungen für den Uplink-Kanal, wobei die Zahl der Übertragungswiederholungen für den Uplink-Kanal aus der Mehrzahl von Übertragungswiederholungen für den Uplink-Kanal abhängig davon ausgewählt wird, ob eine oder mehrere der folgenden Bedingungen erfüllt sind: zwei TCI-Zustände sind in einem Übertragungkonfigurationsangabefeld für ein DCI-Format angegeben, das einen assoziierten gemeinsamen physikalischen Downlink-Kanal, PDSCH, plant, für den eine entsprechende hybride automatische Wiederholungsanfrage-Bestätigung, HARQ-ACK, auf dem Uplink-Kanal getragen wird; ein assoziierter PDSCH entspricht einem bestimmten PDSCH-Schema; ein Prioritätsangabefeld von DCI, die ein assoziiertes PDSCH-Schema planen, ist auf "1" gesetzt; ein assoziierter PDSCH ist durch das DCI-Format 1_2 geplant; die Ressource für den Uplink-Kanal ist mit zwei TCI-Zuständen aktiviert; und eine gewisse Art von Uplink-, UL, Steuerinformationen, UCI, wird von dem Uplink-Kanal getragen; oder

- Bereitstellen (1602), an das UE (712), einer zweiten Konfiguration von einer Mehrzahl der Übertragungswiederholungen für den Uplink-Kanal, wobei die Zahl der Übertragungswiederholungen für den Uplink-Kanal aus der Mehrzahl von Übertragungswiederholungen für den Uplink-Kanal abhängig von einer Art des Datenverkehrs, mit der der Uplink-Kanal assoziiert ist, ausgewählt wird; oder

- Bereitstellen (1602A), an das UE (712), einer oder mehrerer Konfigurationen zum Auswählen der Zahl der Übertragungswiederholungen des Uplink-Kanals, wobei eine der einen oder der mehreren Konfigurationen dynamisch in den DCI angegeben ist.

**11.** Verfahren nach einem der Ansprüche 1 bis 10, wobei Uplink-, UL, Steuerinformationen, UCI, von dem Uplink-Kanal getragen werden.

**12.** Verfahren nach Anspruch 11, wobei die Zahl von Übertragungswiederholungen des Uplink-Kanals mit einer Art der UCI variiert,
wobei, optional, die Art der UCI eines ist von: hybrider automatischer Wiederholungsanfrage-, HARQ, Bestätigung, ACK, Planungsanfrage, SR, Kanalzustandsinformationen, CSI, oder zwei oder mehr von HARQ-ACK, SR und CSI, die gemeinsam gemultiplext sind.

**13.** Benutzergerät, UE, (712, 2000), das dazu ausgelegt ist, in einem drahtlosen Kommunikationsnetzwerk, das zwei oder mehr Übertragungs- und Empfangspunkte, TRP, umfasst, von denen jeder mit einer räumlichen Beziehung oder einem Übertragungskonfigurationsangabezustand, TCI-Zustand, assoziiert ist, zu kommunizieren, wobei das UE dazu ausgelegt ist, das folgende Verfahren durchzuführen:

- nach einem der Ansprüche 1 bis 5;
- nach einem der Ansprüche 7 bis 9 in Abhängigkeit von Anspruch 1; oder
- nach Anspruch 11 oder 12 in Abhängigkeit von Anspruch 1.

**14.** Basisstation (702, 1700), die dazu ausgelegt ist, in einem drahtlosen Kommunikationsnetzwerk, das zwei oder mehr Übertragungs- und Empfangspunkte, TRP, umfasst, von denen jeder mit einer räumlichen Beziehung oder einem Übertragungskonfigurationsangabezustand, TCI-Zustand, assoziiert ist, zu kommunizieren, wobei die Basisstation (702, 1700) dazu ausgelegt ist, das folgende Verfahren durchzuführen:

- nach Anspruch 6;
- nach einem der Ansprüche 7 bis 9 in Abhängigkeit von Anspruch 6;
- nach Anspruch 10; oder
- nach Anspruch 11 oder 12 in Abhängigkeit von Anspruch 6.

**15.** Computerlesbares Medium (1706, 2004), das Anweisungen umfasst, die:

- wenn sie auf einem Prozessor (2002) eines Benutzergeräts (712, 2000) ausgeführt werden, den Prozessor dazu veranlassen, das Verfahren wie folgt durchzuführen:

-- nach einem der Ansprüche 1 bis 5;
-- nach einem der Ansprüche 7 bis 9 in Abhängigkeit von Anspruch 1; oder
-- nach Anspruch 11 oder 12 in Abhängigkeit von Anspruch 1; oder

- wenn sie auf einem Prozessor (1704) einer Basisstation (702, 1700) ausgeführt werden, den Prozessor dazu veranlassen, die Schritte eines Verfahrens wie folgt durchzuführen:

-- nach Anspruch 6;
-- nach einem der Ansprüche 7 bis 9 in Abhängigkeit von Anspruch 6;
-- nach Anspruch 10; oder
-- nach Anspruch 11 oder 12 in Abhängigkeit von Anspruch 6.

**Revendications**

1. Procédé de transmission en liaison montante, effectué par un équipement utilisateur, UE, (712) dans un réseau de communication sans fil qui comporte deux points de transmission et de réception, TRP, ou plus, chacun étant associé à une relation spatiale ou à un état d'indication de configuration de transmission, TCI, le procédé comprenant :

• la réception (1600), d'une station de base (702) dans le réseau de communication sans fil, une configuration d'une première relation spatiale et d'une seconde relation spatiale ou une configuration d'un premier état TCI et d'un second état TCI pour une ressource de canal de liaison montante, et une indication de N répétitions de transmission du canal de liaison montante, dans lequel :

o N est un nombre entier supérieur à un ; et
o la première relation spatiale et la seconde relation spatiale ou le premier état TCI et le second état TCI sont configurés pour former un modèle de mappage sur les répétitions de transmission du canal de liaison montante, le modèle de mappage étant un mappage cyclique ou un mappage séquentiel ;

• la réception d'informations de commande d'une liaison descendante (DL), DCI, qui indiquent la ressource de canal de liaison montante utilisée pour les répétitions de transmission du canal de liaison montante ; et
• la transmission (1604) du canal de liaison montante dans N sous-fentes consécutives dans la ressource de canal de liaison montante, et selon le modèle de mappage, l'application de la première relation spatiale ou du premier état TCI aux répétitions de transmission du canal de liaison montante dans un premier sous-ensemble des sous-fentes et l'application de la seconde relation spatiale ou du second état TCI aux répétitions de transmission du canal de liaison montante dans un second sous-ensemble des sous-fentes.

2. Procédé selon la revendication 1, dans lequel :

- un nombre total de sous-fentes dans le premier sous-ensemble des sous-fentes et dans le second sous-ensemble des sous-fentes est égal au nombre de répétitions de transmission ; et/ou
- le premier sous-ensemble des sous-fentes et le second sous-ensemble des sous-fentes se trouvent dans un même emplacement ; et/ou
- chacune des sous-fentes comprend un certain nombre de symboles de multiplexage par répartition orthogonale de la fréquence (OFDM) ; et/ou
- le premier sous-ensemble des sous-fentes et le second sous-ensemble des sous-fentes ne se chevauchent pas dans le temps ; et/ou
- la même ressource de canal de liaison montante est allouée dans chacune des sous-fentes ; et/ou
- le canal de liaison montante est l'un des canaux de commande en liaison montante physique, PUCCH, formats 0 à 4 ; et/ou
- le premier sous-ensemble des sous-fentes comporte une ou plusieurs sous-fentes, et le second sous-ensemble des sous-fentes comporte une ou plusieurs sous-fentes.

3. Procédé selon la revendication 1 ou 2 comprenant en outre :

- la réception (1602), depuis la station de base (702), d'une seconde configuration de multiples nombres de répétitions de transmission pour le canal de liaison montante, le nombre de répétitions de transmission du canal de liaison montante étant sélectionné parmi les multiples nombres de répétitions de transmission pour le canal de liaison montante selon qu'une ou plusieurs des conditions suivantes sont remplies : deux états TCI sont indiqués dans un champ d'indication de configuration de transmission d'un format DCI planifiant un canal physique partagé de liaison descendante associé, PDSCH, pour lequel un accusé de réception de demande de répétition automatique hybride correspondant, HARQ- ACK, est transporté sur le canal de liaison montante ;

un PDSCH associé correspond à un schéma PDSCH particulier ; un champ d'indicateur de priorité d'une DCI planifiant un PDSCH associé est défini sur « 1 » ; un PDSCH associé est planifié par le format DCI 1_2 ; la ressource pour le canal de liaison montante est activée avec deux états TCI ; et un certain type d'informations de commande en liaison montante (UL) UCI est transporté par le canal de liaison montante ; ou
- la réception (1602), en provenance de la station de base (702), d'une seconde configuration de multiples nombres de répétitions de transmission pour le canal de liaison montante, le nombre de répétitions de transmission du canal de liaison montante étant sélectionné parmi les multiples nombres de répétitions de transmission pour la liaison montante canal en fonction d'un type de trafic auquel le canal de liaison montante est associé ; ou
- la réception (1602A), en provenance de la station de base (702), d'une ou de plusieurs configurations pour sélectionner le nombre de répétitions de transmission du canal de liaison montante, l'une de la ou des configurations étant indiquée dynamiquement dans les DCI.

4. Procédé selon l'une quelconque des revendications 1 à 3, comprenant en outre :

- l'abandon (1604A) d'une répétition de transmission du canal de liaison montante lorsqu'une telle répétition de transmission du canal de liaison montante chevauche un autre canal de liaison montante ayant une priorité plus élevée ; ou
- le multiplexage (1604A) d'une répétition de transmission du canal de liaison montante avec un autre canal de liaison montante se chevauchant avec une même priorité ; ou
- l'omission (1604B) d'une répétition de transmission correspondante si la transmission entre en collision avec un symbole invalide ; ou
- si une transmission entre en collision avec un symbole invalide, le fait de retarder (1604B) une répétition de transmission correspondante jusqu'à ce que suffisamment de symboles valides soient disponibles.

5. Procédé selon l'une quelconque des revendications 1 à 4, dans lequel :

- le procédé comprend en outre, si le canal de liaison montante transportant un HARQ-ACK correspondant à un PDSCH transportant une commande d'élément de contrôle, CE, d'un contrôle d'accès au support, MAC, provenant de la station de base (702) est transmis dans l'emplacement n, l'application de la commande MAC CE à partir d'une première fente 3 millisecondes après la fente n ; ou
- la configuration peut se faire via un message de contrôle de ressources radio, RRC, une commande MAC CE ou les deux.

6. Procédé de transmission en liaison montante, exécuté par une station de base (702), dans un réseau de communication sans fil qui comporte deux ou plusieurs points de transmission et de réception, TRP, chacun étant associé à une relation spatiale ou à un état d'une indication de configuration de transmission, TCI, le procédé comprenant :

• la fourniture (1600), à un équipement utilisateur, UE, (712) dans le réseau de communication sans fil, d'une configuration d'une première relation spatiale et d'une seconde relation spatiale ou d'une configuration d'un premier état TCI et d'un second état TCI pour une ressource d'un canal de liaison montante, et une indication de N répétitions de transmission pour transmettre le canal de liaison montante, dans lequel :

o N est un nombre entier supérieur à un ; et
o la première relation spatiale et la seconde relation spatiale ou le premier état TCI et le second état TCI sont configurés pour former un modèle de mappage sur les répétitions de transmission du canal de liaison montante, le modèle de mappage étant un mappage cyclique ou un mappage séquentiel ; et

• la fourniture d'une information de commande de liaison descendante (DL) DCI, à l'UE (712), qui indique la ressource du canal de liaison montante utilisée pour les répétitions de transmission du canal de liaison montante.

7. Procédé selon l'une quelconque des revendications 1 à 6, dans lequel :

- chacun du premier état TCI et du second état TCI est l'un des éléments suivants : un état TCI unifié qui peut être utilisé à la fois pour des transmissions de canal de liaison descendante et de liaison montante ; et un état TCI de liaison montante qui peut être utilisé uniquement pour des transmissions de canal de liaison montante ; et/ou
- le canal de liaison montante est un canal de commande de liaison montante physique, PUCCH.

**8.** Procédé selon l'une quelconque des revendications 1 à 7, dans lequel :

- chacune de la première relation spatiale et de la seconde relation spatiale comprend un ou plusieurs éléments parmi : un index de bloc de signal de synchronisation, SSB, un index de signal de référence d'informations d'état de canal, CSI-RS, ou un index de signal de référence de sondage, SRS, utilisés pour déterminer un filtre spatial à utiliser pour la transmission de canal de liaison montante ; un index de signal de référence de perte de trajet et un ou plusieurs paramètres de contrôle de puissance ; ou
- chacun du premier état TCI et du second état TCI comprend un ou plusieurs éléments parmi : un index de bloc de signal de synchronisation, SSB, index, un index de signal de référence d'informations d'état de canal, CSI-RS, ou un index de signal de référence de sondage, SRS, utilisés pour déterminer un filtre spatial à utiliser pour la transmission de canal de liaison montante ; un index de signal de référence de perte de trajet, et un ou plusieurs paramètres de contrôle de puissance.

**9.** Procédé selon l'une quelconque des revendications 1 à 8, dans lequel :

- le mappage cyclique de la première relation spatiale et de la seconde relation spatiale ou le mappage cyclique du premier état TCI et du second état TCI est configuré sur les répétitions du canal de liaison montante, la première relation spatiale ou le premier état TCI étant appliqués à une répétition sur deux du canal de liaison montante à partir de la première répétition et la seconde relation spatiale ou le second état TCI étant appliqués aux répétitions restantes ; ou
- le mappage séquentiel de la première relation spatiale et de la seconde relation spatiale ou le mappage séquentiel du premier état TCI et du second état TCI est configuré sur les répétitions du canal de liaison montante, la première relation spatiale ou le premier état TCI étant appliqués à une répétition temporelle consécutive sur deux du canal de liaison montante à partir des deux premières répétitions consécutives et la seconde relation spatiale ou le second état TCI étant appliqués aux répétitions restantes.

**10.** Procédé selon la revendication 6 ou l'une quelconque des revendications 7 à 9 lorsqu'elles dépendent de la revendication 6, comprenant en outre :

- la fourniture (1602), à l'UE (712), d'une seconde configuration de multiples nombres de répétitions de transmission pour le canal de liaison montante, le nombre de répétitions de transmission du canal de liaison montante étant sélectionné parmi les multiples nombres de répétitions de transmission pour le canal de liaison montante selon qu'une ou plusieurs des conditions suivantes sont remplies : deux états TCI sont indiqués dans un champ d'indication de configuration de transmission d'un format DCI planifiant un canal physique partagé de liaison descendante associé, PDSCH, pour lequel un accusé de réception de demande de répétition automatique hybride correspondant, HARQ-ACK , est transporté sur le canal de liaison montante ; un PDSCH associé correspond à un schéma PDSCH particulier ; un champ d'indicateur de priorité d'une DCI planifiant un PDSCH associé est défini sur « 1 » ; un PDSCH associé est planifié par le format DCI 1_2 ; la ressource pour le canal de liaison montante est activée avec deux états TCI ; et un certain type d'informations de commande de liaison montante (UL), UCI, est transporté par le canal de liaison montante ; ou
- la fourniture (1602), à l'UE (712), d'une seconde configuration de multiples nombres de répétitions de transmission pour le canal de liaison montante, le nombre de répétitions de transmission du canal de liaison montante étant sélectionné parmi les multiples nombres de répétitions de transmission pour le canal de liaison montante en fonction du type de trafic auquel le canal de liaison montante est associé ; ou
- la fourniture (1602A), à l'UE (712), d'une ou de plusieurs configurations pour sélectionner le nombre de répétitions de transmission du canal de liaison montante, l'une de la ou des configurations étant indiquée dynamiquement dans les DCI.

**11.** Procédé selon l'une quelconque des revendications 1 à 10, dans lequel des informations de commande de liaison montante (UL), UCI sont transportées par le canal de liaison montante.

**12.** Procédé selon la revendication 11, dans lequel le nombre de répétitions de transmission du canal de liaison montante varie avec un type d'UCI,
dans lequel, éventuellement, le type de l'UCI est l'un des suivants : accusé de réception, ACK, d'une demande de répétition automatique hybride, HARQ, demande de planification, SR, informations sur l'état du canal, CSI, ou deux ou plusieurs parmi HARQ-ACK, SR et CSI multiplexés ensemble.

**13.** Équipement utilisateur, UE, (712, 2000) adapté pour communiquer dans un réseau de communication sans fil qui comporte au moins deux points de transmission et de réception, TRP, chacun étant associé à une relation spatiale ou à un état d'indication de configuration de transmission, TCI, l'UE étant adapté pour exécuter le procédé selon :

- l'une quelconque des revendications 1 à 5 ;
- l'une quelconque des revendications 7 à 9 lorsqu'elle dépend de la revendication 1 ; ou
- la revendication 11 ou 12 lorsqu'elle dépend de la revendication 1.

14. Station de base (702, 1700) adaptée pour communiquer dans un réseau de communication sans fil qui comporte deux ou plusieurs points de transmission et de réception, TRP, chacun étant associé à une relation spatiale ou à un état d'indication de configuration de transmission, TCI, la station de base (702) étant adaptée pour exécuter le procédé selon :

- la revendication 6 ;
- l'une quelconque des revendications 7 à 9 lorsqu'elle dépend de la revendication 6 ;
- la revendication 10 ; ou
- la revendication 11 ou 12 lorsqu'elle dépend de la revendication 6.

15. Support lisible par ordinateur (1706, 2004) comprenant des instructions qui :

- lorsqu'elles sont exécutées sur un processeur (2002) d'un équipement utilisateur (712, 2000), amènent le processeur à exécuter le procédé selon :

-- l'une quelconque des revendications 1 à 5,
-- l'une quelconque des revendications 7 à 9 lorsqu'elle dépend de la revendication 1, ou
-- la revendication 11 ou 12 lorsqu'elle dépend de la revendication 1 ; ou

- lorsqu'elles sont exécutées sur un processeur (1704) d'une station de base (702, 1700), amènent le processeur à exécuter les étapes d'un procédé selon :

-- la revendication 6,
-- l'une quelconque des revendications 7 à 9 lorsqu'elle dépend de la revendication 6,
-- la revendication 10, ou
-- la revendication 11 ou 12 lorsqu'elle dépend de la revendication 6.

ONE SLOT (14 SYMBOLS)

CONTROL (PDCCH), POSSIBLY DATA

PDCH (DATA)

*FIG. 1*

RESOURCE BLOCK

RESOURCE ELEMENT

SYSTEM BANDWIDTH

FREQUENCY

TIME

ONE SLOT

OFDM SYMBOL #

0 1 2 3 4 5 6 7 8 9 10 11 12 13

11 10 9 8 7 6 5 4 3 2 1 0

SUBCARRIERS

A 14-SYMBOL SLOT

*FIG. 2*

(a) ONE SYMBOL PUCCH

(b) TWO SYMBOL PUCCH

PUCCH

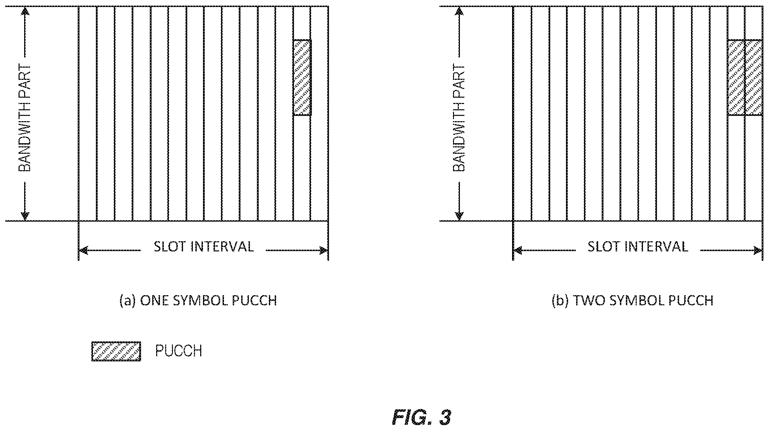

*FIG. 3*

(a) 14 SYMBOL PUCCH

(b) 7 SYMBOL PUCCH

PUCCH

FIG. 4

FIG. 5

(a) 14 SYMBOL PUCCH

(b) 7 SYMBOL PUCCH

BANDWITH PART

SLOT INTERVAL

PUCCH

(a) INTER-SLOT FH ENABLED

(b) INTER-SLOT FH DISABLED, AND INTRA-SLOT FH ENABLED

PUCCH

*FIG. 6*

*FIG. 7*

EP 4 193 542 B1

*FIG. 8*

```
PUCCH-FormatConfig ::=                    SEQUENCE {
    interslotFrequencyHopping             ENUMERATED {enabled}        OPTIONAL, -- Need R
    additionalDMRS                        ENUMERATED {true}           OPTIONAL, -- Need R
    maxCodeRate                           PUCCH-MaxCodeRate           OPTIONAL, -- Need R
    nrofSlots                             ENUMERATED {n2,n4,n8}       OPTIONAL, -- Need R
    pi2BPSK                               ENUMERATED {enabled}        OPTIONAL, -- Need R
    simultaneousHARQ-ACK-CSI              ENUMERATED {true}           OPTIONAL, -- Need R
    startingSymbolOffset                  ENUMERATED {true}           OPTIONAL  -- Need R
}
```

*FIG. 9*

*FIG. 10*

SUB-SLOT INDEX

*FIG. 11*

PUCCH TOWARD TRP1 (1ST TRANSMISSION)

PUCCH TOWARD TRP2 (2ND TRANSMISSION)

FIG. 12

SUB-SLOT INDEX

| 1 | 2 | 3 | 4 | 5 | 6 | 7 |

UL SLOT

BANDWITH PART

SLOT INTERVAL

PUCCH TOWARD TRP1 (1ST TRANSMISSION)

PUCCH TOWARD TRP2 (2ND TRANSMISSION)

*FIG. 13*

SLOT INDEX

| i | i+1 |

COLLISION

PUCCH REPETITIONS

PUSCH REPETITIONS

COLLISION RESOLUTION

PUCCH REPETITIONS

PUSCH REPETITIONS

TRP1

TRP2

*FIG. 14*

FIG. 15

```
┌──────────┐                                              ┌──────────┐
│   BASE   │                                              │    UE    │
│ STATION  │                                              │   712    │
│   702    │                                              │          │
└────┬─────┘                                              └────┬─────┘
     │  1600.  A CONFIGURATION OF A FIRST AND SECOND SPATIAL   │
     │ RELATIONS OR A CONFIGURATION OF A FIRST AND SECOND TCI  │
     │ STATES FOR A UPLINK CHANNEL RESOURCE, AND AN INDICATION │
     │ OF N TRANSMISSION REPETITIONS OF THE UPLINK CHANNEL     │
     │──────────────────────────────────────────────────────▶ │
     │        1600A. A CONFIGURATION OF GAP SYMBOL(S)          │
     │- - - - - - - - - - - - - - - - - - - - - - - - - - - -▶ │
     │      1602.  A CONFIGURATION OF MULTIPLE NUMBERS OF THE  │
     │              TRANSMISSION REPETITIONS                   │
     │──────────────────────────────────────────────────────▶ │
     │ 1602A. ONE OR MORE CONFIGURATIONS FOR DETERMINING THE   │
     │ NUMBER OF TRANSMISSION REPETITIONS, ONE CONFIGURATION   │
     │            IS DYNAMICALLY INDICATED IN DCI              │
     │- - - - - - - - - - - - - - - - - - - - - - - - - - - -▶ │
```

TRANSMITTING THE UPLINK CHANNEL, A NUMBER OF TIMES
ACCORDING TO THE NUMBER OF TRANSMISSION
REPETITIONS, IN A FIRST SET OF SUB-SLOTS ACCORDING TO
THE FIRST SPATIAL RELATION OR THE FIRST TCI STATE, AND
IN A SECOND SET OF SUB-SLOTS ACCORDING TO THE
SECOND SPATIAL RELATION OR THE SECOND TCI STATE
1604

DROPPING ONE TRANSMISSION REPETITION WHEN
OVERLAPPING WITH ANOTHER UPLINK CHANNEL WITH A
HIGHER PRIORITY OR MULTIPLEXING ONE TRANSMISSION
REPETITION WITH AN OVERLAPPING UPLINK CHANNEL
1604A

OMITTING OR DELAYING ONE TRANSMISSION REPETITION
WHEN COLLIDING WITH AN INVALID SYMBOL
1604B

1606.  MAC CE COMMAND

ADJUSTING TIMING IN APPLYING  THE MAC CE COMMAND
1608

*FIG. 16*

43

1700

CONTROL SYSTEM
1702

NETWORK
INTERFACE
1708

PROCESSOR(S)
1704

MEMORY
1706

RADIO UNIT(S)
1710

TX(S) 1712

RX(S) 1714

1716

1716

*FIG. 17*

RADIO ACCESS NODE
1700

MODULE(S)
1900

*FIG. 19*

FIG. 18

EP 4 193 542 B1

2000

2012

TRANSCEIVER(S)
2006

MEMORY
2004

PROCESSOR(S)
2002

TX(S) 2008

RX(S) 2010

2012

**FIG. 20**

UE
2000

MODULE(S)
2100

**FIG. 21**

FIG. 22

2300

HOST COMPUTER 2302

2328

SW 2310 | HOST APPLICATION 2312

HW 2304 | COMMUNICATION INTERFACE 2306

PROCESSING CIRCUITRY 2308

BASE STATION 2318

SW 2332

HW 2320 | COMMUNICATION INTERFACE 2322

RADIO INTERFACE 2324

PROCESSING CIRCUITRY 2330

2316

UE 2314

SW 2340 | CLIENT APPLICATION 2342

HW 2334 | RADIO INTERFACE 2336

PROCESSING CIRCUITRY 2338

2326

FIG. 23

BEGIN

HOST COMPUTER
PROVIDES USER DATA
2400

HOST COMPUTER
EXECUTES HOST
APPLICATION
2402

HOST COMPUTER
INITIATES
TRANSMISSION
CARRYING THE USER
DATA TO THE UE
2404

BASE STATION
TRANSMITS THE USER
DATA
2406

UE EXECUTES THE
CLIENT APPLICATION
2408

END

FIG. 24

BEGIN

HOST COMPUTER
PROVIDES USER DATA
2500

HOST COMPUTER
INITIATES
TRANSMISSION
CARRYING THE USER
DATA TO THE UE
2502

UE RECEIVES THE USER
DATA
2504

END

FIG. 25

BEGIN

UE RECEIVES INPUT
DATA PROVIDED AT
HOST COMPUTER
2600

UE EXECUTES
CLIENT
APPLICATION
2604

UE PROVIDES USER
DATA
2602

UE EXECUTES
CLIENT
APPLICATION
2606

UE INITIATES
TRANSMISSION OF THE
USER DATA TO THE
HOST COMPUTER
2608

HOST COMPUTER
RECEIVES USER DATA
TRANSMITTED FROM
THE UE
2610

END

*FIG. 26*

BEGIN

BASE STATION
RECEIVES USER DATA
FROM UE
2700

BASE STATION INITIATES
TRANSMISSION OF USER
DATA TO THE HOST
COMPUTER
2702

HOST COMPUTER
RECEIVES THE USER
DATA
2704

END

*FIG. 27*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019244221 A1

- US 2021259004 A1

**Non-patent literature cited in the description**

- **LTT DOCOMO INC.** Enhancements on multi-TRP/panel transmission. *3GPP draft, R1-1911184*